# EUROPEAN PATENT APPLICATION

(11) **EP 4 568 387 A1**
(43) Date of publication of application: **11.06.2025**
(21) Application number: 23851837.7
(22) Date of filing: 08.08.2023
(51) Int. Cl.: H04W 72/04

(54) **MCCH INFORMATION ACQUISITION METHOD, DEVICE AND SYSTEM**

(30) Priority: 10.08.2022 CN 202210956874
(71) Applicant: Huawei Technologies Co., Ltd., Shenzhen, Guangdong 518129 (CN)
(72) Inventor: LIU, Nannan, Shenzhen, Guangdong 518129 (CN); LI, Bingzhao, Shenzhen, Guangdong 518129 (CN)
(74) Representative: Isarpatent
(86) International application number: PCT/CN2023/111767
(87) International publication number: WO 2024/032616

(57) **Abstract**

Embodiments of this application provide an MCCH information obtaining method, and impact of a BWP operation on MBS reception is considered. In the method, when an active BWP is switched to a BWP including a broadcast CFR, UE may receive MCCH information by using an advantageous condition that the active BWP includes the broadcast CFR. In this way, after the BWP switching, the UE can learn of, as soon as possible, MBS broadcast configuration information currently used by a network, and implement normal reception of an MBS broadcast service as soon as possible, instead of using previously obtained old MCCH information until a next MCCH change notification is received.

## Description

This application claims priority to Chinese Patent Application No. 202210956874.9, filed with the China National Intellectual Property Administration on August 10, 2022 and entitled "MCCH INFORMATION OBTAINING METHOD, DEVICE, AND SYSTEM", which is incorporated herein by reference in its entirety.

### TECHNICAL FIELD

This application relates to the field of wireless communication technologies, and in particular, to a multicast/broadcast service control channel MCCH information obtaining method, a related device, and a system.

### BACKGROUND

A new radio (new radio, NR) multicast/broadcast service (Multicast/Broadcast Service, MBS) is an important feature of the 3GPP 5G Release R17. The MBS can effectively utilize communication resources. In a communication network, the MBS provides a point-to-multipoint service in which one data source sends data to a plurality of users, to implement resource sharing and improve utilization of resources, especially air interface resources. Usually, in an MBS scenario, information may be broadcast to all users, or may be sent to a group of paid subscribers for viewing. This can help an operator develop a variety of commercial applications such as multimedia advertising, free-of-charge and paid television channels, and group multimedia messaging. The MBS supports multicast and broadcast. For broadcast, user equipment (user equipment, UE) obtains and receives a multicast/broadcast service control channel (MBS control channel, MCCH) configuration by using a SIB20, and the UE obtains and receives an MBS traffic channel (MBS traffic channel, MTCH) configuration by using MCCH information.

### SUMMARY

Embodiments of this application provide an MCCH information obtaining method, a related device, and a system. In this way, after switching to a BWP including a broadcast CFR, UE can learn of, as soon as possible, MBS broadcast configuration information currently used by a network, and implement normal reception of an MBS broadcast service as soon as possible, instead of using previously obtained old MCCH information until a next MCCH change notification is received.

According to a first aspect, an embodiment of this application provides an MCCH information obtaining method. The method may include: UE obtains MCCH information when a preset condition is met. The preset condition includes a first condition. The first condition may include: The UE switches to a first BWP. The first BWP includes a first CFR. The first CFR is a broadcast CFR (or a broadcast-related CFR). For example, the UE may receive broadcast-related transmission on the first CFR. Correspondingly, a network device may send broadcast-related transmission on the first CFR. The broadcast-related transmission includes any one or more of the following: MCCH-related transmission (for example, DCI scrambled by an MCCH-RNTI, and/or MCCH information), and MTCH-related transmission (for example, DCI scrambled by a G-RNTI, and/or MTCH information).

Optionally, the method provided in the first aspect may further include: The UE obtains information about the first CFR.

For example, the information about the first CFR may include any one or more of the following: bandwidth of the first CFR, and a location of the first CFR. The information about the first CFR may further include other content. This is not limited in this application. For example, the location of the first CFR may include a frequency domain location of the first CFR. For example, the frequency domain location of the first CFR may include any one or more of the following: a center frequency of the first CFR, a starting frequency of the first CFR (for example, a lower boundary or a left boundary of the first CFR), and a termination/ending frequency of the first CFR (for example, an upper boundary or a right boundary of the first CFR). The information about the first CFR may be carried in any one or more of the following: a broadcast message or system information (for example, a SIB20). For example, the UE obtains the SIB20, and the UE obtains the information about the first CFR.

Optionally, the method provided in the first aspect may further include: The UE obtains information about the first BWP. The information about the first BWP may include any one or more of the following: bandwidth of the first BWP, a location of the first BWP, a first subcarrier spacing (SCS) corresponding to the first BWP, and an identity (ID) of the first BWP. The information about the first BWP may further include other content. This is not limited in this application.

For example, the location of the first BWP may include a frequency domain location of the first BWP.

For example, the frequency domain location of the first BWP may include any one or more of the following: a center frequency of the first BWP, a starting frequency of the first BWP (for example, a lower boundary or a left boundary of the first BWP), and a termination/ending frequency of the first BWP (for example, an upper boundary or a right boundary of the first BWP).

For example, the information about the first BWP may be carried in any one or more of the following: an RRC message (for example, RRC dedicated signaling or an RRC reconfiguration message), and a broadcast message or system information (for example, a SIB1).

For example, the first BWP may be a dedicated BWP or an initial BWP of a terminal device.

For example, the UE may receive, on the first BWP, any one or more of DCI (for example, DCI scrambled by a C-RNTI or a CS-RNTI), data (for example, DTCH information), and signaling that are sent by the network device.

Optionally, in the method provided in the first aspect, that the UE switches to a first BWP may include: The UE switches from a second BWP to the first BWP. The second BWP does not include the first CFR. That the second BWP does not include the first CFR may include: The second BWP completely does not overlap the first CFR, or the second BWP partially overlaps the first CFR.

Optionally, in the method provided in the first aspect, the preset condition may further include another condition. Specifically, any one or more of the following three manners may be included.

In a first manner, the preset condition may further include: In at least one MCCH modification period, the UE receives no DCI scrambled by an MCCH-RNTI.

Optionally, the at least one MCCH modification period may be after or located after a first moment. The first moment may be a moment at which the UE last successfully receives DCI scrambled by an MCCH-RNTI.

In a second manner, the preset condition may further include: A first state lasts for at least one MCCH modification period, or lasts for duration of at least one MCCH modification period.

The first state may include: An active BWP of the UE is the second BWP or a third BWP. The third BWP does not include the first CFR. That the third BWP does not include the first CFR may include: The third BWP completely does not overlap the first CFR, or the third BWP partially overlaps the first CFR.

Optionally, the first state may be before or located before a second moment.

In a third manner, the preset condition may further include: The UE successfully receives first DCI.

The first DCI is scrambled by an MCCH-RNTI. The first DCI includes first indication information and/or second indication information. The first indication information may indicate that a new MBS broadcast service starts. The second indication information may indicate an MCCH information change other than start of a new MBS broadcast service.

Optionally, that the UE successfully receives first DCI may specifically include: The UE successfully receives the first DCI on the second BWP or a fourth BWP. The second BWP partially overlaps the first CFR. The fourth BWP partially overlaps the first CFR. For example, the UE switches from the fourth BWP to the second BWP, and then switches from the second BWP to the first BWP.

Optionally, in the third manner, the preset condition may further include: The UE receives no MCCH information after successfully receiving the first DCI, or the UE receives no MCCH message scheduled by using the first DCI.

Optionally, the receiving no MCCH information may include: No MCCH information is received on the second BWP or the fourth BWP.

Optionally, that the UE receives no MCCH information after successfully receiving the first DCI may include: After the UE successfully receives the first DCI, the UE receives no MCCH information before the second moment.

Optionally, in the method provided in the first aspect, that UE obtains MCCH information may include: The UE starts to obtain MCCH information; or the UE obtains MCCH information in a next MCCH repetition period.

Optionally, in the method provided in the first aspect, the UE is receiving an MBS broadcast service, and/or the UE is interested in receiving an MBS broadcast service.

Optionally, in the method provided in the first aspect, the UE has an MBS capability, or has an MBS broadcast capability.

In the MBS MCCH obtaining method provided in the first aspect, the UE switches to a BWP including a broadcast CFR, and the UE may obtain MCCH information. In this way, the UE can obtain changed MCCH information as soon as possible, instead of using previously obtained old MCCH information until a next MCCH change notification is successfully received. In this way, the UE can normally receive a broadcast service as soon as possible or start to receive a broadcast service as soon as possible, so that performance of the UE in broadcast service reception can be improved.

According to a second aspect, an embodiment of this application provides an MCCH information obtaining method. The method may include: A network device sends a first message when a third condition is met. The third condition includes any one or more of the following: a condition A, a condition B, a condition C, and a condition D. The condition A includes: MCCH information changes. The condition B includes: An active BWP of UE does not include a first CFR; or the network device determines that the UE cannot receive or successfully receive DCI scrambled by an MCCH-RNTI; or the network device determines that the UE cannot receive or successfully receive MCCH information. The condition C includes: The network device successfully receives a second message. The condition D includes: An MCCH information change is related to a broadcast service that the UE is receiving and/or a broadcast service that the UE is interested in receiving. The UE obtains MCCH information when a preset condition is met. The preset condition includes a second condition. The second condition may include: The UE successfully receives the first message.

Optionally, the method provided in the second aspect may further include: The UE sends a second message, where the second message is an MBS interest indication message. For example, the second message may be used for any one or more of the following: indicating a broadcast or a broadcast service that the UE is receiving and/or a broadcast or a broadcast service that the UE is interested in receiving; indicating a broadcast or a broadcast service that the UE no longer receives and/or a broadcast or a broadcast service that the UE is no longer interested in; and indicating priorities of broadcast reception and unicast reception and/or multicast reception.

Optionally, in the method provided in the second aspect, the first message may be used for any one or more of the following: indicating an MCCH information change, indicating the UE to obtain MCCH information, and indicating broadcast service information.

Optionally, in the method provided in the second aspect, the first message may be used for any one or more of the following: indicating MCCH information, and indicating configuration information of a broadcast service that the UE is receiving and/or a broadcast service that the UE is interested in receiving.

Optionally, in the method provided in the second aspect, the first message may be carried in dedicated signaling (for example, RRC dedicated signaling), paging DCI, or a paging message. This is not limited in this application. For example, the RRC dedicated signaling may include an RRC reconfiguration message. For example, the paging DCI may include a short message of paging DCI.

Optionally, in the method provided in the second aspect, the first message is transmitted on the active BWP of the UE.

Optionally, in the method provided in the second aspect, the first message may include one or more of the following: third indication information, fourth indication information, and fifth indication information. The third indication information may indicate that a new MBS broadcast service starts. The fourth indication information may indicate an MCCH information change other than a new MBS broadcast service. The fifth indication information may indicate information about a first MBS broadcast service. For example, the first MBS broadcast service may include one or more of the following: a broadcast service that the UE is receiving, and a broadcast service that the UE is interested in receiving. For example, the fifth indication information may include an identity (for example, a TMGI) or a service index of the first MBS broadcast service. This is not limited.

In the foregoing MBS MCCH obtaining method provided in the second aspect, although the UE cannot normally perform broadcast reception when the active BWP does not include the first CFR, the UE may determine, based on the first message sent by the network device, that MCCH information changes, or may determine, based on the first message sent by the network device, that MCCH information needs to be obtained, or may obtain, based on the first message sent by the network device, MCCH information or configuration information of a broadcast service that the UE is receiving and/or a broadcast service that the UE is interested in receiving. In this way, the UE can obtain changed MCCH information (or configuration information of a broadcast service that the UE is receiving and/or a broadcast service that the UE is interested in receiving) as soon as possible, instead of using previously obtained old MCCH information until a next MCCH change notification is successfully received. In this way, the UE can normally receive a broadcast service as soon as possible or start to receive a broadcast service as soon as possible, so that performance of the UE in broadcast service reception can be improved.

According to a third aspect, an embodiment of this application provides an MCCH information obtaining method. The method may be formed by combining the methods provided in the first aspect and the second aspect. In the method, a preset condition may include a first condition and a second condition. For specific content, refer to the foregoing content. Details are not described herein again. After UE that receives a first message switches to a first BWP, the UE obtains MCCH information. In this way, the UE may determine, based on the first message sent by a network device, that MCCH information changes, or may determine, based on the first message sent by the network device, that MCCH information needs to be obtained, and can obtain MCCH information as soon as possible after switching to the first BWP. In this way, the UE can obtain changed MCCH information (or configuration information of a broadcast service that the UE is receiving and/or a broadcast service that the UE is interested in receiving) as soon as possible, instead of using previously obtained old MCCH information until a next MCCH change notification is successfully received. In this way, the UE can normally receive a broadcast service as soon as possible or start to receive a broadcast service as soon as possible, so that performance of the UE in broadcast service reception can be improved.

According to a fourth aspect, this application provides user equipment. The user equipment may include a communication unit and a processing unit, configured to correspondingly perform the method provided in the first aspect, or a function on the user equipment side in the method provided in the second aspect, or a function on the user equipment side in the method provided in the third aspect.

According to a fifth aspect, this application provides a network device. The network device may include a communication unit and a processing unit, configured to correspondingly perform a function on the network device side in the method provided in the second aspect, or a function on the network device side in the method provided in the third aspect.

According to a sixth aspect, this application provides user equipment. The user equipment may include: a memory, and a processor and a transceiver that are coupled to the memory. The transceiver is configured to communicate with another communication device. The memory is configured to store code for implementing the MCCH obtaining method provided in this application. The processor is configured to execute the program code stored in the memory, to be specific, perform the method provided in the first aspect, or a function on the user equipment side in the method provided in the second aspect, or a function on the user equipment side in the method provided in the third aspect.

According to a seventh aspect, this application provides a network device. The network device may include: a memory, and a processor and a transceiver that are coupled to the memory. The transceiver is configured to communicate with another communication device. The memory is configured to store code for implementing the MCCH obtaining method provided in this application. The processor is configured to execute the program code stored in the memory, to be specific, perform a function on the network device side in the method provided in the second aspect, or a function on the network device side in the method provided in the third aspect.

According to an eighth aspect, a communication system is provided. The communication system includes a network device and user equipment. The user equipment may be the user equipment described in the fourth aspect, and the network device may be the network device described in the fifth aspect, or the user equipment may be the user equipment described in the sixth aspect, and the network device may be the network device described in the seventh aspect.

According to a ninth aspect, a computer-readable storage medium is provided. The readable storage medium stores instructions. When the instructions are run on a computer, the computer is enabled to perform the method provided in the first aspect, or a function on the user equipment side in the method provided in the second aspect, or a function on the user equipment side in the method provided in the third aspect.

According to a tenth aspect, another computer-readable storage medium is provided. The readable storage medium stores instructions. When the instructions are run on a computer, the computer is enabled to perform a function on the network device side in the method provided in the second aspect, or a function on the network device side in the method provided in the third aspect.

According to an eleventh aspect, a computer program product including instructions is provided. When the computer program product is run on a computer, the computer is enabled to perform the method provided in the first aspect, or a function on the user equipment side in the method provided in the second aspect, or a function on the user equipment side in the method provided in the third aspect.

According to a twelfth aspect, another computer program product including instructions is provided. When the computer program product is run on a computer, the computer is enabled to perform a function on the network device side in the method provided in the second aspect, or a function on the network device side in the method provided in the third aspect.

### BRIEF DESCRIPTION OF DRAWINGS

To describe technical solutions in embodiments of this application or in the background more clearly, the following describes accompanying drawings used in embodiments of this application or in the background.
FIG. 1 is a diagram of a system structure of a communication system according to an embodiment of this application;
FIG. 2 shows transmission timing of MCCH information and DCI;
FIG. 3 shows several relationships between an activate BWP and a broadcast CFR;
FIG. 4 shows a process of an MCCH information obtaining method according to an embodiment of this application;
FIG. 5 shows a process of another MCCH information obtaining method according to an embodiment of this application;
FIG. 6 shows a case in which UE may have missed an MCCH change notification;
FIG. 7 shows another case in which UE may have missed an MCCH change notification;
FIG. 8 shows still another case in which UE may have missed an MCCH change notification;
FIG. 9 shows still another case in which UE may have missed an MCCH change notification;
FIG. 10 shows still another case in which UE may have missed an MCCH change notification;
FIG. 11 shows still another case in which UE may have missed an MCCH change notification;
FIG. 12 shows a case in which UE receives an MCCH change notification;
FIG. 13 shows another case in which UE receives an MCCH change notification;
FIG. 14 shows still another case in which UE receives an MCCH change notification;
FIG. 15 shows still another case in which UE receives an MCCH change notification;
FIG. 16 shows user equipment according to an embodiment of this application;
FIG. 17 shows a network device according to an embodiment of this application;
FIG. 18 is a functional block diagram of user equipment and a network device in a wireless communication system according to an embodiment of this application; and
FIG. 19 is a diagram of a structure of a processor according to an embodiment of this application.

### DESCRIPTION OF EMBODIMENTS

The following clearly and completely describes technical solutions in embodiments of this application with reference to accompanying drawings in embodiments of this application.

The terms "first", "second", and the like in this specification, the claims, and the accompanying drawings of this application are intended to distinguish between different objects, but not to describe a specific sequence. "First" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features. In descriptions of embodiments, "a plurality of" means two or more, unless otherwise specified.

In addition, the terms "include", "have", and any variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "a plurality of" means two or more. "And/or" describes an association relationship between associated objects, and indicates that three relationships may exist. For example, "A and/or B" may indicate the following three cases: Only A exists, only B exists, and both A and B exist, where A and B may be in a singular form or a plural form. The character "/" usually indicates an "or" relationship between the associated objects. Both "when" and "if" mean that corresponding processing is performed in an objective case, but are not intended to limit time. In addition, the terms do not necessarily mean that a determining action is performed during implementation, and do not mean another limitation either.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. To be precise, the term "example", "for example", or the like is intended to present a related concept in a specific manner for ease of understanding.

For ease of understanding a communication method disclosed in embodiments of this application, a communication system to which embodiments of this application are applicable is described.

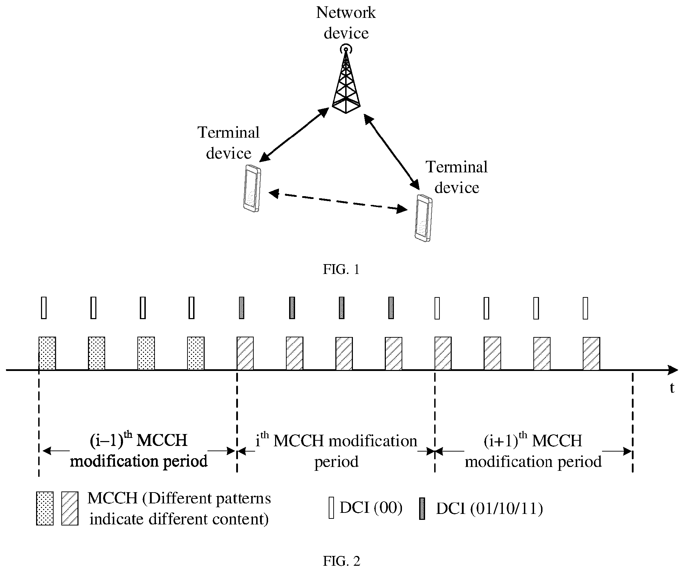

Embodiments of this application may be used in a wireless communication system, for example, a 5th generation mobile communication (5th generation mobile communication, 5G) system, a 6th generation mobile communication (6th generation mobile communication, 6G) system, a next-generation radio access network (next-generation radio access network, NG-RAN), satellite communication, or short-range communication. A system architecture is shown in FIG. 1. The wireless communication system may include one or more network devices and one or more terminal devices. Point-to-point communication may also be performed in the wireless communication system. For example, a plurality of terminal devices communicate with each other.

It can be understood that the wireless communication system mentioned in embodiments of this application includes but is not limited to: a narrowband internet of things (narrowband internet of things, NB-IoT) system, a long term evolution (long term evolution, LTE) system, a 5G/6G mobile communication system in three application scenarios, namely, enhanced mobile broadband (enhanced mobile broadband, eMBB), ultra-reliable and low latency communications (ultra-reliable and low latency communications, URLLC), and massive machine type communication (massive machine type communication, mMTC), a wireless fidelity (wireless fidelity, Wi-Fi) system, a mobile communication system later than 5G, or the like.

In embodiments of this application, the network device is a device with a wireless transceiver function and is configured to communicate with the terminal device. The network device may be an evolved NodeB (evolved NodeB, eNB or eNodeB) in LTE, a base station in a 5G/6G network, a base station in a future evolved public land mobile network (public land mobile network, PLMN), a broadband network gateway (broadband network gateway, BNG), an aggregation switch, a non-3rd generation partnership project (3rd generation partnership project, 3GPP) access device, or the like. Optionally, the network device in embodiments of this application may include base stations in various forms, for example, a macro base station, a micro base station (also referred to as a small cell), a relay station, an access point, a device for implementing a base station function in the future, an access node in a Wi-Fi system, a transmitting and receiving point (transmitting and receiving point, TRP), a transmitting point (transmitting point, TP), a mobile switching center, and a device that provides a base station function in device-to-device (device-to-device, D2D), vehicle-to-everything (vehicle-to-everything, V2X), or machine-to-machine (machine-to-machine, M2M) communication. This is not specifically limited in embodiments of this application.

The network device may communicate and interact with a core network device, to provide a communication service for the terminal device. The core network device is, for example, a device in a core network (core network, CN) of a 5G network. As a bearer network, the core network provides an interface for connecting to a data network, provides communication connection, authentication, management, and policy control for a terminal, carries a data service, and so on.

The terminal device in embodiments of this application may include various devices with a wireless communication function, for example, a handheld device, a vehicle-mounted device, a wearable device, a computing device, or another processing device connected to a wireless modem. The terminal device may also be referred to as a terminal. The terminal device may also be user equipment (user equipment, UE), an access terminal, a subscriber unit (subscriber unit), a user agent, a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a machine type communication (machine type communication, MTC) terminal, a communication device mounted on a high-altitude aircraft, a wearable device, an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

For ease of understanding a communication method disclosed in embodiments of this application, related concepts in embodiments of this application are briefly described.

### 1. Multicast/broadcast service (multicast and broadcast service, or Multicast/Broadcast Service, MBS)

A multicast/broadcast service mentioned in embodiments of this application may be an MBS in an NR system. The MBS is introduced by the 3GPP to effectively utilize resources of a mobile communication network. In the mobile communication network, the MBS provides a point-to-multipoint service in which one data source sends data to a plurality of users, to implement network resource sharing and improve utilization of resources, especially air interface resources. The NR MBS supports multicast and broadcast.

### 2. Broadcast reception

An MBS broadcast service or MBS broadcast data is carried in an MBS traffic channel (MTCH) that is a logical channel. UE needs to obtain, based on MBS broadcast configuration information (for example, an MBSBroadcastConfiguration message), configuration information related to MTCH reception, and then obtain a broadcast service or broadcast data carried in the MTCH. The MBS broadcast configuration information is carried in an MBS control channel (MCCH) that is a logical channel (or the MBS broadcast configuration information is provided in the MCCH that is a logical channel). For example, the MBS broadcast configuration information indicates MBS broadcast sessions provided in a cell and scheduling-related information corresponding to the sessions. To sum up, the UE needs to obtain the MBS broadcast configuration information to learn of currently used MBS broadcast configuration information and normally receive the MTCH based on the configuration information. The UE needs to obtain, based on a SIB20, configuration information related to MCCH (or MBS broadcast configuration information) reception. For example, the UE needs to first obtain the SIB20, obtain the configuration information related to the MCCH reception from the SIB20, obtain the MBS broadcast configuration information, obtain the configuration information related to the MTCH reception from the MBS broadcast configuration information, and then obtain the broadcast service or the broadcast data. The MBS broadcast configuration information may also be referred to as MCCH information.

In this application, the broadcast service may include an MBS broadcast service.

In this application, the broadcast data may include MBS broadcast data.

As shown in FIG. 2, the MCCH information changes only in a specific radio frame, and the MCCH information does not change in an MCCH modification period (modification period). Information about the MCCH modification period (for example, mcch-ModificationPeriod) may be included in the SIB20, and a boundary of the MCCH modification period may be calculated according to the following formula: SFN mod mcch-ModificationPeriod = 0. In an MCCH modification period, same MCCH information may be transmitted for a plurality of times. A PDCCH schedules the MCCH information during each repetition. To be specific, in an MCCH modification period, a PDCCH for scheduling MCCH information is transmitted for the same quantity of times as a quantity of times that the MCCH information is transmitted. The MCCH information (carried in an MCCH) is periodically transmitted based on a configurable MCCH repetition period (repetition period). For example, information about the MCCH repetition period (for example, a repetition period length, and an offset of the repetition period) may be included in the SIB20, and a radio frame in which the MCCH (for example, DCI for scheduling the MCCH information, and/or the MCCH information) is scheduled may be calculated according to the following formula: SFN mod repetition period length = offset of the repetition period. For example, the MCCH (for example, the DCI for scheduling the MCCH information, and/or the MCCH information) is transmitted in an MCCH transmission window, and information about the MCCH transmission window (for example, mcch-WindowStartSlot and/or mcch-WindowDuration) may be included in the SIB20.

For example, the mcch-ModificationPeriod indicates a length of the MCCH modification period.

For example, the repetition period length indicates a length of the MCCH repetition period.

For example, the offset of the repetition period indicates an offset of the MCCH repetition period.

For example, the mcch-WindowStartSlot indicates a starting slot of the MCCH transmission window.

For example, the mcch-WindowDuration indicates a length of the MCCH transmission window.

Optionally, in this application, the calculation may include determining.

When a network has changed the MCCH information, the network notifies the UE through a physical downlink control channel (physical downlink control channel, PDCCH) by starting from a beginning of the MCCH modification period. Specifically, whether the MCCH has changed is indicated by downlink control information (downlink control information, DCI) scrambled by an MBS control channel radio network temporary identifier (MBS control channel RNTI, MCCH-RNTI). If UE that is receiving an MBS broadcast service or is interested in an MBS broadcast service successfully receives an MCCH change notification, the UE obtains new MCCH information. The UE uses previously obtained MCCH information until the UE obtains the new MCCH information. The MCCH change notification is indicated by using two bits. A most significant bit being 1 indicates that a new service starts. A least significant bit being 1 indicates an MCCH information change other than a change caused by start of a new service, for example, a configuration change of an ongoing MBS session, termination of an MBS session, or an information change of a neighboring cell.

For example, as shown in FIG. 2, the MCCH information starts to change in an i^{th} MCCH modification period, and changed MCCH information is still used in an (i+1)^{th} MCCH modification period. The network indicates an MCCH change in DCI that is scrambled by an MCCH-RNTI and that is delivered in the i^{th} MCCH modification period, and does not indicate an MCCH change in DCI that is scrambled by an MCCH-RNTI and that is delivered in the (i+1)^{th} MCCH modification period. If the UE successfully receives an MCCH change notification, the UE obtains the MCCH. If the UE receives no MCCH change notification, the UE does not obtain the MCCH.

### 3. Bandwidth part (bandwidth part, BWP) and common frequency resource (common frequency resource, CFR)

A bandwidth part (bandwidth part, BWP) operation is one of NR physical layer characteristics that affect MBS reception. The BWP operation means that UE does not need to operate on entire cell bandwidth, but only needs to operate on a specific BWP, for example, an active BWP or an initial BWP. In view of the BWP operation, a broadcast common frequency resource (common frequency resource, CFR) is introduced in the 3GPP 5G Release R17. On the broadcast CFR, a plurality of UEs can jointly perform broadcast reception. The broadcast reception includes receiving a common PDCCH and a common physical downlink shared channel (physical downlink shared channel, PDSCH), where the PDSCH carries data or information coming from an MCCH or an MTCH that is a logical channel. In addition, DCI that is scrambled by an MCCH-RNTI and that is carried in the PDCCH is also transmitted on the broadcast CFR.

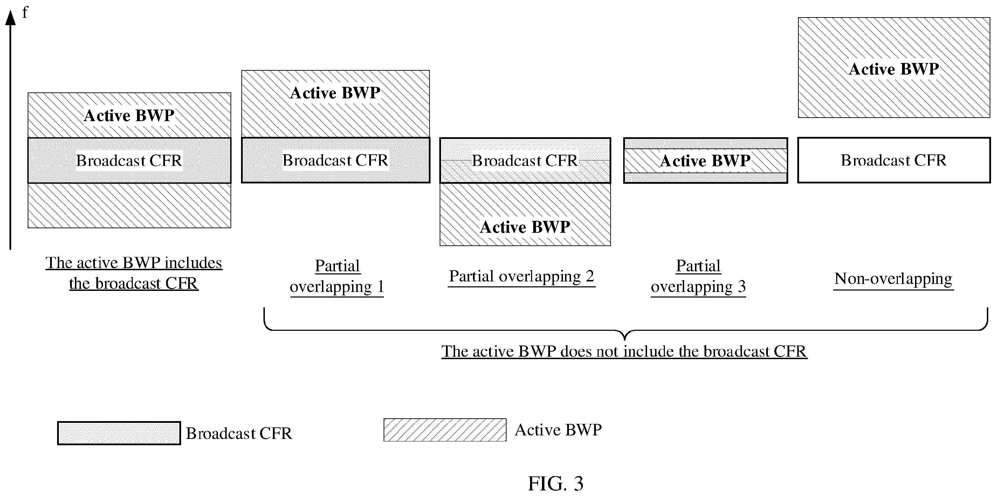

FIG. 3 shows a case in which an active BWP of UE includes a broadcast CFR and a case in which an active BWP does not include a broadcast CFR.

That an active BWP includes a broadcast CFR means that, in terms of a bandwidth size, frequency bandwidth occupied by the active BWP is greater than or equal to frequency bandwidth occupied by the broadcast CFR, and in terms of a frequency domain location, a lower boundary of the active BWP is not higher than a lower boundary of the broadcast CFR, and an upper boundary of the active BWP is not lower than an upper boundary of the broadcast CFR. Certainly, that an active BWP includes a broadcast CFR may alternatively be defined in terms of a frequency domain location.

That an active BWP does not include a broadcast CFR includes two cases: The active BWP completely does not overlap the broadcast CFR, and the active BWP partially overlaps the broadcast CFR. The completely not overlapping may mean that, in terms of a frequency domain location, a lower boundary of the active BWP is not lower than an upper boundary of the broadcast CFR, or an upper boundary of the active BWP is not higher than a lower boundary of the broadcast CFR.

The partially overlapping may mean that a lower boundary of the active BWP is lower than an upper boundary of the broadcast CFR but higher than a lower boundary of the broadcast CFR in terms of a frequency domain location, and an upper boundary of the active BWP is higher than the upper boundary of the broadcast CFR in terms of a frequency domain location, as indicated by "Partial overlapping 1" in FIG. 3; or may mean that an upper boundary of the active BWP is higher than a lower boundary of the broadcast CFR but lower than an upper boundary of the broadcast CFR in terms of a frequency domain location, and a lower boundary of the active BWP is lower than the lower boundary of the broadcast CFR in terms of a frequency domain location, as indicated by "Partial overlapping 2" in FIG. 3; or may mean that, in terms of a frequency domain location, an upper boundary of the active BWP is lower than an upper boundary of the broadcast CFR, and a lower boundary of the active BWP is higher than a lower boundary of the broadcast CFR, as indicated by "Partial overlapping 3" in FIG. 3. Alternatively, the partially overlapping may mean that a lower boundary of the active BWP is lower than an upper boundary of the broadcast CFR but higher than a lower boundary of the broadcast CFR in terms of a frequency domain location, or may mean that an upper boundary of the active BWP is higher than a lower boundary of the broadcast CFR but lower than an upper boundary of the broadcast CFR in terms of a frequency domain location.

The being not higher than may include being lower than or equal to.

The being not lower than may include being higher than or equal to.

If an active BWP of the UE does not include a broadcast CFR, it cannot be ensured that the UE can continuously successfully receive data or information from an MCCH or an MTCH that is a logical channel. Similarly, if an active BWP of the UE does not include a broadcast CFR, it cannot be ensured that the UE can normally successfully receive DCI for scheduling MCCH information. Therefore, during a period in which an active BWP does not include a broadcast CFR, the UE may miss an MCCH change notification. If the UE misses an MCCH change notification, the UE can use only previously obtained MCCH information until a next MCCH change notification is received. This may cause the following problem: After BWP switching is performed to make an active BWP include a broadcast CFR, the UE still cannot normally receive a broadcast service, or still cannot receive a broadcast service, or still does not start to receive a broadcast service. This affects performance of the UE in broadcast service reception. For example, if DCI that is used for scheduling MCCH information and that is missed by the UE indicates start of a new service, and the new service is a service that the UE is interested in, after BWP switching is performed to make an active BWP include a broadcast CFR, the UE still cannot receive a broadcast service or does not start to receive a broadcast service. For example, if DCI that is used for scheduling MCCH information and that is missed by the UE indicates an MCCH information change other than a change caused by start of a new service, and a service that is being received by the UE is changed, after BWP switching is performed to make an active BWP include a broadcast CFR, the UE still cannot normally receive a broadcast service or still cannot receive a broadcast service. This is because MCCH information previously obtained by the UE may not be MCCH information currently used by a network, in other words, MCCH information has been updated. In addition, the network may not update MCCH information again immediately after the BWP switching, and therefore does not deliver an MCCH change notification. Therefore, the UE does not obtain the MCCH information currently used by the network.

The BWP switching may include the following types: BWP switching based on RRC signaling, BWP switching based on a timer, and BWP switching based on DCI. Different types of BWP switching are applicable to different scenarios.

For example, a BWP may be understood as a subset of cell bandwidth. For example, a BWP may be understood as a part of cell bandwidth. For example, cell bandwidth includes a BWP. For example, a BWP may alternatively be equal to cell bandwidth.

For example, for a cell, a terminal device may obtain configurations of one or more BWPs, and the terminal device may perform BWP switching. However, there is only one active BWP at specific time. On the active BWP, the terminal device may perform sending or receiving. For example, on the active BWP, the terminal device may perform any one or more of the following: performing transmission on a UL-SCH, performing transmission on a RACH, monitoring a PDCCH, transmitting a PUCCH, reporting CSI, transmitting an SRS, receiving a DL-SCH, transmitting a PSBCH, transmitting a PSCCH, transmitting an SL-SCH, transmitting a PSFCH, receiving a PSFCH, receiving a PSBCH, receiving a PSCCH, and receiving an SL-SCH.

For example, a CFR may be understood as a subset of cell bandwidth or a BWP. For example, a CFR may be understood as a part of cell bandwidth or a BWP. For example, cell bandwidth or a BWP includes a CFR. For example, a CFR may alternatively be equal to cell bandwidth or a BWP.

It should be noted that the BWP and the CFR are used for description in this specification, but names of the BWP and the CFR are not limited thereto, and may alternatively be other names.

It should be noted that, in this application, a bandwidth part may include a part of bandwidth.

To avoid the foregoing problems, impact of a BWP operation is considered in an MCCH obtaining method provided in embodiments of this application.

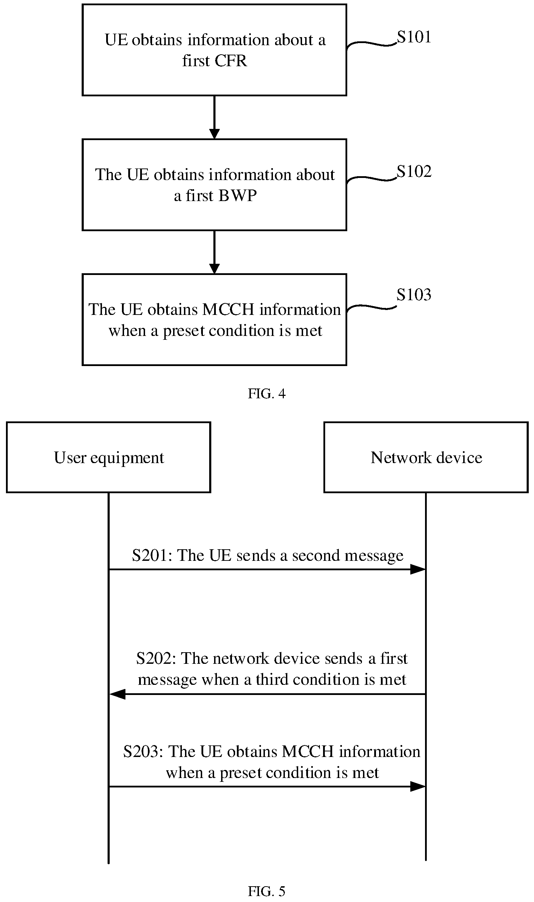

FIG. 4 shows an overall process of an MCCH obtaining method. In the method, impact of a BWP operation on MBS reception is considered on a UE side. As shown in FIG. 4, the method may include the following steps.

S101: UE obtains information about a first CFR.

S101 is an optional step.

For example, the information about the first CFR may include any one or more of the following: bandwidth of the first CFR, and a location of the first CFR. The information about the first CFR may further include other content. This is not limited in this application.

For example, the location of the first CFR may include a frequency domain location of the first CFR.

For example, the frequency domain location of the first CFR may include any one or more of the following: a center frequency of the first CFR, a starting frequency of the first CFR (for example, a lower boundary or a left boundary of the first CFR), and a termination/ending frequency of the first CFR (for example, an upper boundary or a right boundary of the first CFR).

For example, the information about the first CFR may be carried in any one or more of the following: a broadcast message or system information (for example, a SIB20). For example, the UE obtains the SIB20, and the UE obtains the information about the first CFR.

For example, the first CFR is a broadcast CFR (or a broadcast-related CFR). For example, the UE may receive broadcast-related transmission on the first CFR. Correspondingly, a network device may send broadcast-related transmission on the first CFR. The broadcast-related transmission includes any one or more of the following: MCCH-related transmission (for example, DCI scrambled by an MCCH-RNTI, and/or MCCH information), and MTCH-related transmission (for example, DCI scrambled by a G-RNTI, and/or MTCH information, and/or MTCH data).

Optionally, in this application, the DCI scrambled by the MCCH-RNTI may include or may be replaced with DCI for scheduling MCCH information.

For example, the MCCH-RNTI may include or may be replaced with a first RNTI. The first RNTI is used for any one or more of the following: used for dynamically scheduling MCCH information or MCCH signaling, used for an MCCH change notification, and used for dynamically scheduling an MCCH change notification.

For example, the G-RNTI may include or may be replaced with a second RNTI. The second RNTI is used for any one or more of the following: used for dynamically scheduling MBS point-to-multipoint (Point-to-Multipoint, PTM) transmission, and used for dynamically scheduling MTCH data or MTCH signaling.

S102: The UE obtains information about a first BWP.

S102 is an optional step.

The information about the first BWP may include any one or more of the following: bandwidth of the first BWP, a location of the first BWP, a first subcarrier spacing (subcarrier spacing, SCS) corresponding to the first BWP, and an identity (identity, ID) of the first BWP. The information about the first BWP may further include other content. This is not limited in this application.

For example, the location of the first BWP may include a frequency domain location of the first BWP.

For example, the frequency domain location of the first BWP may include any one or more of the following: a center frequency of the first BWP, a starting frequency of the first BWP (for example, a lower boundary or a left boundary of the first BWP), and a termination/ending frequency of the first BWP (for example, an upper boundary or a right boundary of the first BWP).

For example, the information about the first BWP may be carried in any one or more of the following: an RRC message (for example, RRC dedicated signaling or an RRC reconfiguration message), and a broadcast message or system information (for example, a SIB1).

For example, the first BWP may be a dedicated BWP or an initial BWP of a terminal device.

For example, the UE may receive, on the first BWP, any one or more of DCI (for example, DCI scrambled by a cell radio network temporary identifier (cell-RNTI, C-RNTI) or a configured scheduling RNTI (configured scheduling RNTI, CS-RNTI)), data (for example, dedicated traffic channel (dedicated traffic channel, DTCH) information or DTCH data), and signaling that are sent by the network device.

It should be noted that an execution sequence or specific execution time of steps S101 and S102 is not limited in this application.

S103: The UE obtains MCCH information when a preset condition is met.

Optionally, that the preset condition is met may include: The UE determines that the preset condition is met.

Optionally, in this application, the obtaining MCCH information may include: re-obtaining MCCH information.

The preset condition includes a first condition.

The first condition may include: The UE switches to the first BWP. The first BWP includes the first CFR. For description about an active BWP including the first CFR, refer to the foregoing content. Details are not described herein again.

For example, the "switching to the first BWP" may include: activating the first BWP.

In this application, the MCCH information may alternatively be replaced with an MCCH message, or may be replaced with another name. This is not limited in this application.

For example, the MCCH information may include control information applicable to a broadcast service transmitted through a broadcast MBS radio bearer (MBS Radio Bearer, MRB). For example, the MCCH information may include any one or more of the following information: a parameter for obtaining a PDSCH for an MTCH, a discontinuous reception (discontinuous reception, DRX) configuration, a list of neighboring cells that provide broadcast services through broadcast MRBs, and periodicity and offset parameters related to an MTCH PDCCH occasion-to-synchronization signal block (Synchronization Signal Block, SSB) mapping window.

For example, the MCCH information is an MBSBroadcastConfiguration message.

Optionally, that the UE switches to the first BWP may include: The UE switches from a second BWP to the first BWP.

The second BWP does not include the first CFR. For description about an active BWP not including the first CFR, refer to the foregoing content. Details are not described herein again.

That the second BWP does not include the first CFR may include: The second BWP completely does not overlap the first CFR, or the second BWP partially overlaps the first CFR.

Optionally, the preset condition may further include another condition. Specifically, any one or more of the following three manners may be included.

In a first manner, the preset condition may further include: In at least one MCCH modification period, the UE receives no DCI scrambled by an MCCH-RNTI.

Optionally, this application may further include: The UE obtains information about an MCCH modification period. For example, the information about the MCCH modification period (for example, mcch-ModificationPeriod) may include a length of the MCCH modification period. For example, the information about the MCCH modification period may be carried in any one or more of the following: a broadcast message or system information (for example, a SIB20). For example, the UE obtains the SIB20, and the UE obtains the information about the MCCH modification period.

Optionally, this application may further include: The UE determines the MCCH modification period, or the UE determines a boundary of the MCCH modification period.

For example, the boundary (for example, an SFN) of the MCCH modification period may be determined by using the following formula: SFN mod mcch-ModificationPeriod = 0.

For example, the "in at least one MCCH modification period" may include: with respect to at least one MCCH modification period.

For example, the at least one MCCH modification period may include at least one complete MCCH modification period.

Optionally, the at least one MCCH modification period may be after or located after a first moment. The first moment may be a moment at which the UE last successfully receives DCI scrambled by an MCCH-RNTI.

In this application, the "successfully receiving" may include: obtaining, detecting, or parsing out.

In this embodiment of this application, the "receiving" and the "successfully receiving" have different meanings. Specifically, the "receiving" means performing a receiving action, and a result of the "receiving" may be "successfully receiving" or "receiving no ...". "Not receiving" means not performing a receiving action, and a result of the "not receiving" is "receiving no ...". To be specific, the "receiving no ..." includes two cases: A receiving action is performed but no information is received, and no receiving action is performed. Unified descriptions are provided herein, and details are not described below again. The "not receiving" and "receiving no ..." have different meanings. Specifically, the "not receiving" means not performing a receiving action, and a result of the "not receiving" is "receiving no ...". The "receiving no ..." includes two cases: A receiving action is performed but no information is received, and no receiving action is performed. Unified descriptions are provided herein, and details are not described below again.

In this application, the "last" may include a previous time or the last time.

It can be understood that, in the conventional technology, if UE receives no DCI scrambled by an MCCH-RNTI in at least one MCCH modification period, the UE does not know whether a network device has changed MCCH information in the at least one MCCH modification period. If the network device has changed the MCCH information in the at least one MCCH modification period, in the conventional technology, the UE does not obtain the MCCH information. Consequently, the UE cannot receive a broadcast service, or cannot normally receive a broadcast service, or does not start to receive a broadcast service. This affects performance of the UE in broadcast service reception. The UE obtains the MCCH information when the preset condition is met. In this way, the UE can obtain changed MCCH information as soon as possible, instead of using previously obtained old MCCH information until a next MCCH change notification is successfully received. In this way, the UE can normally receive a broadcast service as soon as possible or start to receive a broadcast service as soon as possible, so that performance of the UE in broadcast service reception can be improved.

For example, an active BWP of the UE at the first moment may include the first CFR, or may not include the first CFR. This is not limited in this application. For example, the active BWP of the UE at the first moment is the second BWP.

In this application, a moment may include time, and the time may be a time point or a period of time. This is not limited.

Optionally, within time between the first moment and a second moment, an active BWP of the UE may always be a same BWP, or the UE may perform BWP switching for one or more times. For example, within the time between the first moment and the second moment, the active BWP of the UE may include one or more BWPs at different time. Optionally, within the time between the first moment and the second moment, the active BWP of the UE may include the first CFR, or may not include the first CFR.

The second moment is a moment at which the UE switches to the first BWP.

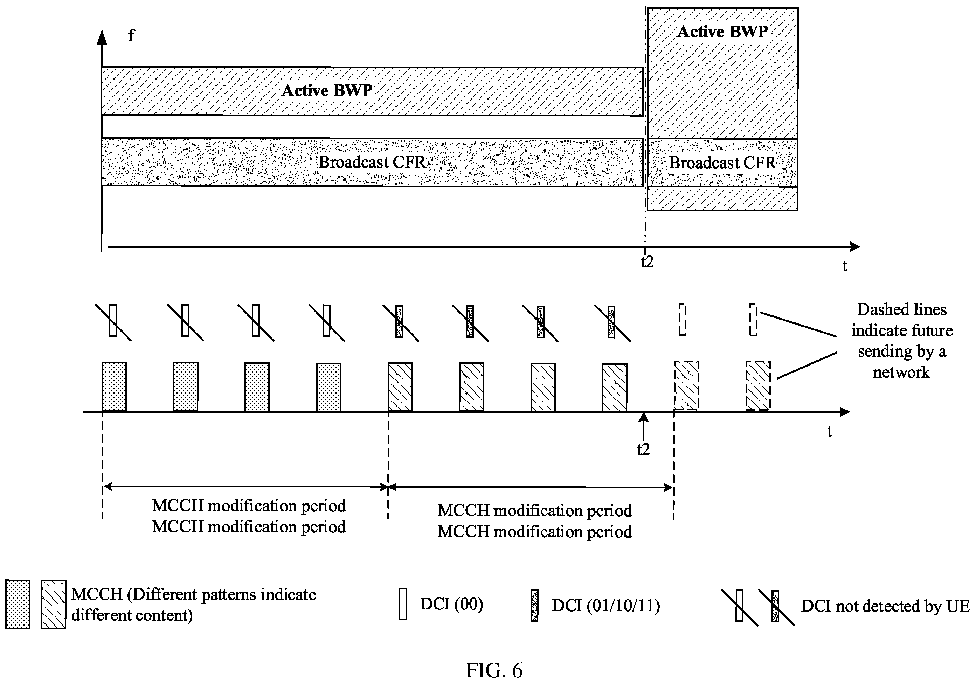

FIG. 6 to FIG. 11 show examples of content related to the first manner. Details are described below, and details are not described herein.

In a second manner, the preset condition may further include: A first state lasts for at least one MCCH modification period, or lasts for duration of at least one MCCH modification period.

The first state may include: An active BWP of the UE is the second BWP or a third BWP; or an active BWP of the UE does not include the first CFR.

The third BWP does not include the first CFR. That the third BWP does not include the first CFR may include: The third BWP completely does not overlap the first CFR, or the third BWP partially overlaps the first CFR.

For example, that "a first state lasts for at least one MCCH modification period" may include: The first state lasts for at least one complete MCCH modification period.

For example, that "a first state lasts for duration of at least one MCCH modification period" may include: Duration of the first state is equal to duration of at least one MCCH modification period, but is not necessarily a complete MCCH modification period. For example, the first state spans two MCCH modification periods, and duration of the first state includes a second half part of a previous MCCH modification period and a first half part of a next MCCH modification period.

For example, that "a first state lasts for at least one MCCH modification period" may include: In at least one MCCH modification period, the UE is or stays in the first state.

For example, that "a first state lasts for duration of at least one MCCH modification period" may include: In duration of at least one MCCH modification period, the UE is or stays in the first state.

For example, the "in duration of at least one MCCH modification period" may include: with respect to duration of at least one MCCH modification period.

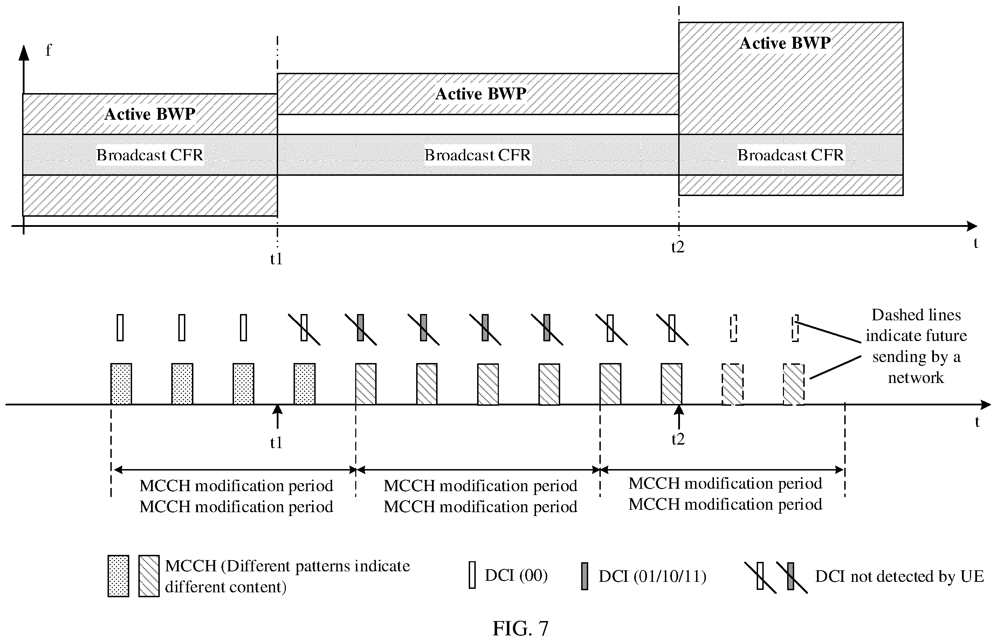

Optionally, the first state may be before or located before the second moment. For example, the second moment may be a moment t2 in subsequent FIG. 7 to FIG. 11.

It can be understood that the first state lasts for at least one MCCH modification period or duration of at least one MCCH modification period, and therefore the UE does not know whether the network device has changed MCCH information in the at least one MCCH modification period or the duration of the at least one MCCH modification period. If the network device has changed the MCCH information in the at least one MCCH modification period or the duration of the at least one MCCH modification period, in the conventional technology, the UE does not obtain the MCCH information. Consequently, the UE cannot receive a broadcast service, or cannot normally receive a broadcast service, or does not start to receive a broadcast service. This affects performance of the UE in broadcast service reception. The UE obtains the MCCH information when the preset condition is met. In this way, the UE can obtain changed MCCH information as soon as possible, instead of using previously obtained old MCCH information until a next MCCH change notification is successfully received. In this way, the UE can normally receive a broadcast service as soon as possible or start to receive a broadcast service as soon as possible, so that performance of the UE in broadcast service reception can be improved.

Optionally, in a time period corresponding to the first state, an active BWP of the UE may always be a same BWP (for example, the second BWP), or the UE may perform BWP switching for one or more times. For example, in the time period corresponding to the first state, the active BWP of the UE may include one or more BWPs at different time. For example, the third BWP may include one or more BWPs. For example, the first state may include: An active BWP of the UE does not include the first CFR.

FIG. 6 to FIG. 11 show examples of content related to the second manner. Details are described below, and details are not described herein.

In a third manner, the preset condition may further include: The UE successfully receives first DCI.

The first DCI is scrambled by an MCCH-RNTI. For example, the first DCI indicates an MCCH change. For example, the first DCI includes first indication information and/or second indication information.

The first indication information may indicate that a new MBS broadcast service starts. The second indication information may indicate an MCCH information change other than start of a new MBS broadcast service.

For example, the new MBS broadcast service is an MBS broadcast service that is not included in MCCH information sent by the network device in a previous MCCH modification period. For example, the MCCH information change other than start of a new MBS broadcast service may be a configuration change of an ongoing MBS session, termination of an MBS session, or an information change of a neighboring cell.

Optionally, that the UE successfully receives first DCI may specifically include: The UE successfully receives the first DCI on the second BWP, a fourth BWP, or a fifth BWP.

For example, the second BWP partially overlaps the first CFR.

For example, the fourth BWP does not include the first CFR. For example, the fourth BWP partially overlaps the first CFR. For example, the UE switches from the fourth BWP to the second BWP, and then switches from the second BWP to the first BWP.

For example, the fifth BWP includes the first CFR. For example, the UE switches from the fifth BWP to the second BWP, and then switches from the second BWP to the first BWP.

It can be understood that the UE successfully receiving the first DCI indicates that the network device has changed MCCH information. That the UE can successfully receive the first DCI does not mean that the UE can successfully receive MCCH information. This is because the UE may be able to detect DCI with a small amount of information by using the second BWP or the fourth BWP that partially overlaps the first CFR, but may be unable to receive MCCH information with a larger amount of information. Therefore, the UE may miss changed MCCH information sent by the network device. Therefore, the UE obtains MCCH information after switching to the first BWP. In this way, the UE can obtain changed MCCH information as soon as possible, instead of using previously obtained old MCCH information until a next MCCH change notification is successfully received. In this way, the UE can normally receive a broadcast service as soon as possible or start to receive a broadcast service as soon as possible, so that performance of the UE in broadcast service reception can be improved.

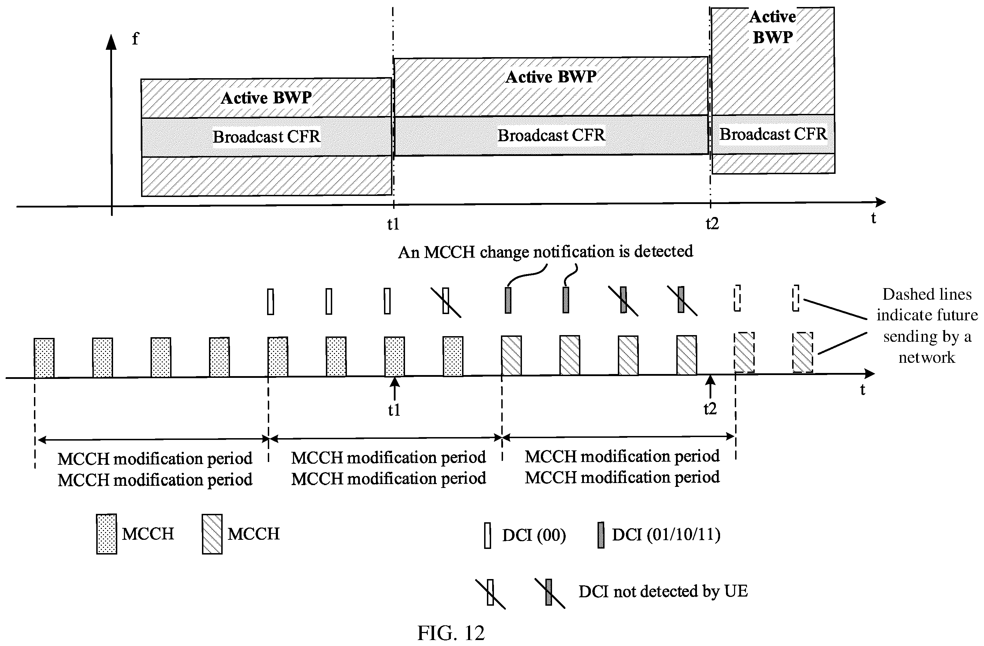

FIG. 12 to FIG. 15 show examples of content related to the third manner. Details are described below, and details are not described herein.

Optionally, in the third manner, the preset condition may further include: The UE receives no MCCH information after successfully receiving the first DCI, or the UE receives no MCCH message scheduled by using the first DCI.

Optionally, the receiving no MCCH information may include: No MCCH information is received on the second BWP, the fourth BWP, or the fifth BWP.

Optionally, that the UE receives no MCCH information after successfully receiving the first DCI may include: After the UE successfully receives the first DCI, the UE receives no MCCH information before the second moment.

It can be understood that the UE successfully receiving the first DCI but receiving no MCCH information indicates that the network device has changed MCCH information but the UE has missed changed MCCH information sent by the network device. Therefore, the UE obtains MCCH information after switching to the first BWP. In this way, the UE can obtain changed MCCH information as soon as possible, instead of using previously obtained old MCCH information until a next MCCH change notification is successfully received. In this way, the UE can normally receive a broadcast service as soon as possible or start to receive a broadcast service as soon as possible, so that performance of the UE in broadcast service reception can be improved.

Optionally, in this application, that the UE obtains MCCH information may include: The UE starts to obtain MCCH information; or the UE obtains MCCH information in a next MCCH repetition period or a next MCCH transmission window.

Optionally, that the UE starts to obtain MCCH information may include any one or more of the following: The UE starts to obtain MCCH information at the second moment; the UE starts to obtain MCCH information when the preset condition is met; and the UE starts to obtain an MCCH message in a next MCCH repetition period or a next MCCH transmission window.

Optionally, this application may further include: The UE obtains information about an MCCH repetition period. For example, the information about the MCCH repetition period may include: a length of the MCCH repetition period (for example, a repetition period length), and/or an offset of the MCCH repetition period (for example, an offset of the repetition period). For example, the information about the MCCH repetition period may be carried in any one or more of the following: a broadcast message or system information (for example, a SIB20). For example, the UE obtains the SIB20, and the UE obtains the information about the MCCH repetition period.

Optionally, in this application, the determining may include calculation.

Optionally, this application may further include: The UE determines the MCCH repetition period, or the UE determines a boundary of the MCCH repetition period, or determines a radio frame (for example, an SFN) in which an MCCH (for example, DCI for scheduling MCCH information, and/or MCCH information) is scheduled.

For example, the boundary (for example, the SFN) of the MCCH modification repetition may be determined by using the following formula, or the radio frame (for example, the SFN) in which the MCCH (for example, the DCI for scheduling the MCCH information, and/or the MCCH information) is scheduled may be determined by using the following formula: SFN mod repetition period length = offset of the repetition period.

Optionally, this application may further include: The UE determines an MCCH transmission window, or the UE determines a boundary of an MCCH repetition period.

Optionally, this application may further include: The UE obtains information about the MCCH transmission window. For example, the information about the MCCH transmission window may include a starting slot of the MCCH transmission window (for example, mcch-WindowStartSlot) and/or a length of the MCCH transmission window (for example, mcch-WindowDuration). For example, the information about the MCCH transmission window may be carried in any one or more of the following: a broadcast message or system information (for example, a SIB20). For example, the UE obtains the SIB20, and the UE obtains the information about the MCCH transmission window. For example, an MCCH (for example, DCI for scheduling MCCH information, and/or MCCH information) is transmitted in the MCCH transmission window.

Optionally, the MCCH transmission window is located in a radio frame in which the MCCH (for example, the DCI for scheduling the MCCH information, and/or the MCCH information) is scheduled.

Optionally, in this application, the UE is receiving an MBS broadcast service, and/or the UE is interested in receiving an MBS broadcast service.

Optionally, in this application, the UE has an MBS capability, or has an MBS broadcast capability.

It can be learned that, in the MBS MCCH obtaining method shown in FIG. 4, the UE switches to a BWP including a broadcast CFR, and the UE may obtain MCCH information. In this way, the UE can obtain changed MCCH information as soon as possible, instead of using previously obtained old MCCH information until a next MCCH change notification is successfully received. In this way, the UE can normally receive a broadcast service as soon as possible or start to receive a broadcast service as soon as possible, so that performance of the UE in broadcast service reception can be improved.

FIG. 5 shows an overall process of another MCCH obtaining method. In the method, impact of a BWP operation is considered. As shown in FIG. 5, the method may include the following steps.

S201: UE sends a second message. Correspondingly, a network device receives the second message.

S201 is an optional step.

For example, the second message may be used for any one or more of the following: indicating a broadcast or a broadcast service that the UE is receiving and/or a broadcast or a broadcast service that the UE is interested in receiving; indicating a broadcast or a broadcast service that the UE no longer receives and/or a broadcast or a broadcast service that the UE is no longer interested in; and indicating priorities of broadcast reception and unicast reception and/or multicast reception.

In this application, a multicast service may include an MBS multicast service.

For example, the second message is an MBSInterestIndication message.

For example, the network device may determine a broadcast service that the UE is receiving and/or a broadcast service that the UE is interested in receiving.

S202: The network device sends a first message when a third condition is met. Correspondingly, the UE receives the first message.

Optionally, that a third condition is met may include: The network device determines that the third condition is met.

The third condition includes any one or more of the following: a condition A, a condition B, a condition C, and a condition D.

The condition A includes: MCCH information changes.

Optionally, in this application, that MCCH information changes may include: The MCCH information is to change, or the MCCH information has changed.

The condition B includes: An active BWP of the UE does not include a first CFR; or the network device determines that the UE cannot receive or cannot successfully receive DCI scrambled by an MCCH-RNTI; or the network device determines that the UE cannot receive or cannot successfully receive MCCH information.

The condition C includes: The network device successfully receives the second message.

The condition D includes: An MCCH information change is related to a broadcast service that the UE is receiving and/or a broadcast service that the UE is interested in receiving.

In a possible implementation, the first message may be used for any one or more of the following: indicating an MCCH information change, indicating the UE to obtain MCCH information, and indicating broadcast service information.

In another possible implementation, the first message may be used for any one or more of the following: indicating MCCH information, and indicating configuration information of a broadcast service that the UE is receiving and/or a broadcast service that the UE is interested in receiving.

Optionally, the first message may be carried in dedicated signaling (for example, RRC dedicated signaling), paging DCI, or a paging message. This is not limited in this application.

For example, the RRC dedicated signaling may include an RRC reconfiguration message.

For example, the paging DCI may include a short message of paging DCI.

Optionally, the first message is transmitted on the active BWP of the UE.

Optionally, the first message may include one or more of the following: third indication information, fourth indication information, and fifth indication information. The third indication information may indicate that a new MBS broadcast service starts. The fourth indication information may indicate an MCCH information change other than a new MBS broadcast service. The fifth indication information may indicate information about a first MBS broadcast service. For example, the first MBS broadcast service may include one or more of the following: a broadcast service that the UE is receiving and/or a broadcast service that the UE is interested in receiving. For example, the fifth indication information may include an identity (for example, a TMGI) or a service index of the first MBS broadcast service. This is not limited.

S203: The UE obtains MCCH information when a preset condition is met.

Optionally, that the preset condition is met may include: The UE determines that the preset condition is met.

The preset condition includes a second condition.

The second condition may include: The UE successfully receives the first message.

It should be noted that an execution sequence or specific execution time of S201, S202, and S203 is not limited. It should be noted that S202 may be an independent embodiment. It should be noted that S203 may also be an independent embodiment. It should be noted that the step on the network device side and the step on the UE side may be independent of each other.

It can be learned that, in the MCCH obtaining method shown in FIG. 5, although the UE cannot normally perform broadcast reception when the active BWP does not include the first CFR, the UE may determine, based on the first message sent by the network device, that MCCH information changes, or may determine, based on the first message sent by the network device, that MCCH information needs to be obtained, or may obtain, based on the first message sent by the network device, MCCH information or configuration information of a broadcast service that the UE is receiving and/or a broadcast service that the UE is interested in receiving. In this way, the UE can obtain changed MCCH information (or configuration information of a broadcast service that the UE is receiving and/or a broadcast service that the UE is interested in receiving) as soon as possible, instead of using previously obtained old MCCH information until a next MCCH change notification is successfully received. In this way, the UE can normally receive a broadcast service as soon as possible or start to receive a broadcast service as soon as possible, so that performance of the UE in broadcast service reception can be improved.

Optionally, the methods shown in FIG. 4 and FIG. 5 may be combined to form a new embodiment. For example, a preset condition may include a first condition and a second condition. For specific content, refer to the foregoing content. Details are not described herein again. In this combined solution, after UE that receives a first message switches to a first BWP, the UE obtains MCCH information. In this way, the UE may determine, based on the first message sent by a network device, that MCCH information changes, or may determine, based on the first message sent by the network device, that MCCH information needs to be obtained, and can obtain MCCH information as soon as possible after switching to the first BWP. In this way, the UE can obtain changed MCCH information as soon as possible, instead of using previously obtained old MCCH information until a next MCCH change notification is successfully received. In this way, the UE can normally receive a broadcast service as soon as possible or start to receive a broadcast service as soon as possible, so that performance of the UE in broadcast service reception can be improved.

For example, FIG. 6 to FIG. 11 show several cases in which UE may have missed an MCCH change notification.

FIG. 6 shows a first case in which UE may have missed an MCCH change notification.

As shown in FIG. 6, the UE performs BWP switching at a moment t2, to switch from a BWP not including a first CFR to a BWP including the first CFR. The moment t2 is later than the end of the last MCCH transmission window in an MCCH modification period (the 2^{nd} modification period in the figure) to which the moment t2 belongs. A possibility is as follows: As shown in FIG. 6, a network device changes MCCH information in the 2^{nd} MCCH modification period and sends an MCCH change notification, and in a subsequent MCCH modification period, continues to use MCCH information changed in the 2^{nd} MCCH modification period and does not send an MCCH change notification. However, in the 2^{nd} MCCH modification period, the UE may be unable to receive DCI scrambled by an MCCH-RNTI. A reason includes: Before the moment t2, an active BWP does not include the first CFR, and consequently, the UE may be unable to receive DCI scrambled by an MCCH-RNTI or may not receive DCI scrambled by an MCCH-RNTI; and after the moment t2, the UE no longer receives DCI scrambled by an MCCH-RNTI or is no longer able to receive DCI scrambled by an MCCH-RNTI. Therefore, the UE may have missed the MCCH change notification sent by the network device in the 2^{nd} MCCH modification period. In the subsequent MCCH modification period, even if an active BWP includes the first CFR, the UE receives no MCCH change notification because the network device sends no MCCH change notification.

For example, the first case may include: First BWP switching is performed in a first MCCH modification period (for example, the 2^{nd} MCCH modification period in the figure) and later than the end of the last MCCH transmission window in the first MCCH modification period. The first BWP switching may be: switching from a BWP not including the first CFR to a BWP including the first CFR.

FIG. 7 shows a second case in which UE may have missed an MCCH change notification.

As shown in FIG. 7, before performing the first BWP switching, the UE further performs second BWP switching at a moment t1: switching from a BWP including the first CFR to the BWP not including the first CFR. In addition, an MCCH modification period (the 1^{st} MCCH modification period in the figure) to which t1 belongs and an MCCH modification period (the 3^{rd} MCCH modification period in the figure) to which t2 belongs are spaced apart by at least one MCCH modification period, for example, are spaced apart by the 2^{nd} MCCH modification period in the figure. A possibility is as follows: As shown in FIG. 7, a network device changes MCCH information in the 2^{nd} MCCH modification period and sends an MCCH change notification, and in the 3^{rd} MCCH modification period, continues to use MCCH information changed in the 2^{nd} MCCH modification period and does not send an MCCH change notification. However, in the 2^{nd} MCCH modification period (namely, the MCCH modification period used as a spacing), an active BWP does not include the first CFR, and the UE may be unable to receive DCI scrambled by an MCCH-RNTI or may not receive DCI scrambled by an MCCH-RNTI, and therefore may be unable to receive the MCCH change notification sent by the network device in the 2^{nd} MCCH modification period. In the 3^{rd} MCCH modification period, even if the BWP is switched to a BWP including the first CFR after the moment t2, the UE receives no MCCH change notification because the network device sends no MCCH change notification.

For example, the second case may include: A second MCCH modification period in which the second BWP switching is performed and the first MCCH modification period in which the first BWP switching is performed are spaced apart by at least one MCCH modification period.

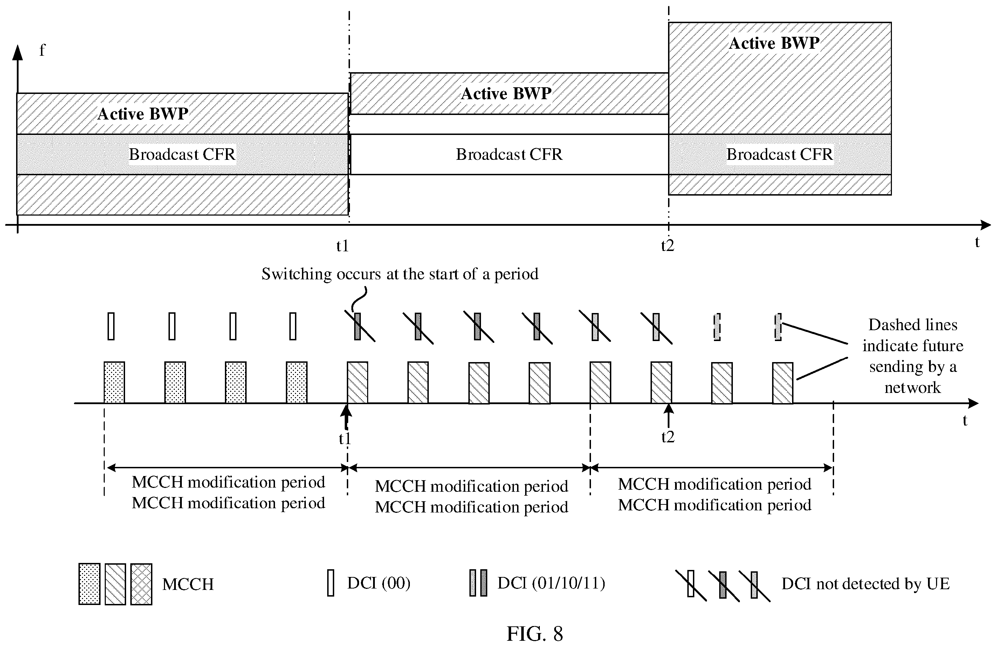

FIG. 8 shows a third case in which UE may have missed an MCCH change notification.

As shown in FIG. 8, before performing the first BWP switching, the UE further performs second BWP switching at a moment t1: switching from a BWP including the first CFR to the BWP not including the first CFR. In addition, the moment t1 is located at the start of an MCCH modification period (the 2^{nd} MCCH modification period in the figure) to which the moment t1 belongs (for example, located before the start of the 1^{st} MCCH transmission window in the 2^{nd} MCCH modification period). A possibility is as follows: As shown in FIG. 8, a network device changes MCCH information in the 2^{nd} MCCH modification period and sends an MCCH change notification, and in the 3^{rd} MCCH modification period, continues to use MCCH information changed in the 2^{nd} MCCH modification period and does not send an MCCH change notification. However, the UE may be unable to receive the MCCH change notification of the network device in the 2^{nd} modification period (to be specific, an MCCH modification period in which the second BWP is performed). A reason includes: After the second BWP switching is performed, an active BWP does not include the first CFR, and consequently, the UE may be unable to receive DCI scrambled by an MCCH-RNTI or may not receive DCI scrambled by an MCCH-RNTI; and before the second BWP switching is performed, the UE has not started to receive DCI scrambled by an MCCH-RNTI or does not receive DCI scrambled by an MCCH-RNTI. In addition, in the subsequent 3^{rd} MCCH modification period, even if the BWP is switched to a BWP including the first CFR after the moment t2, the UE receives no MCCH change notification because the network device sends no MCCH change notification.

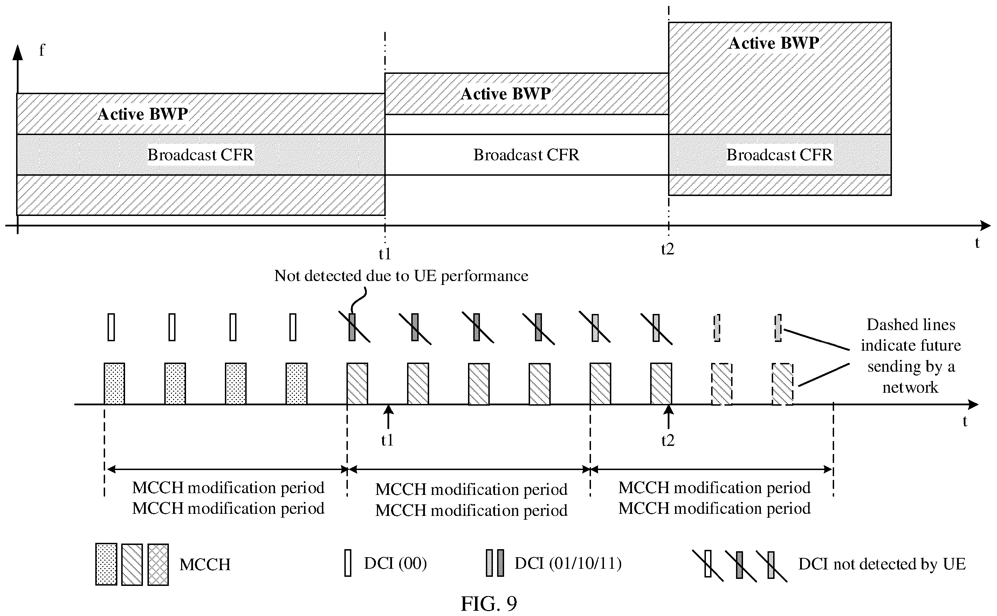

FIG. 8 shows a typical case in which the UE receives no DCI scrambled by an MCCH-RNTI before the second BWP switching is performed. However, this does not constitute a limitation. As shown in FIG. 9, in the 2^{nd} MCCH modification period, the UE may alternatively be unable to receive MCCH information before the second BWP switching is performed due to a reception performance issue (for example, poor signal quality) or the like. A moment at which the second BWP switching is performed is not at the start of an MCCH modification period.

For example, the third case may include: The second BWP switching is performed in a second MCCH modification period (for example, the 2^{nd} MCCH modification period in the figure), and the UE receives no DCI in the second MCCH modification period before the second BWP switching is performed.

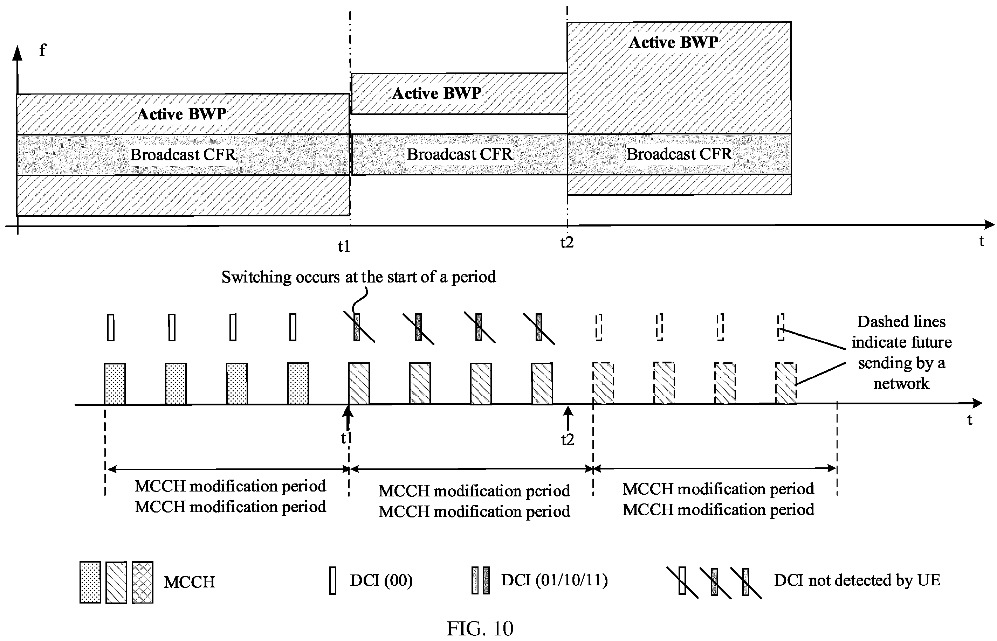

FIG. 10 shows a fourth case in which UE may have missed an MCCH change notification.

As shown in FIG. 10, before performing the first BWP switching, the UE further performs second BWP switching at a moment t1: switching from a BWP including the first CFR to the BWP not including the first CFR. In addition, the second BWP switching and the first BWP switching are performed in a same MCCH modification period, for example, the 2^{nd} MCCH modification period in the figure. The first BWP switching is performed later than the end of the last MCCH transmission window in the MCCH modification period, and the second BWP switching is performed at the start of the MCCH modification period (for example, before the start of the 1^{st} MCCH transmission window in the 2^{nd} MCCH modification period). A possibility is as follows: As shown in FIG. 10, a network device changes MCCH information in the 2^{nd} MCCH modification period and sends an MCCH change notification, and in the 3^{rd} MCCH modification period, continues to use MCCH information changed in the 2^{nd} MCCH modification period and does not send an MCCH change notification. However, in the 2^{nd} MCCH modification period (namely, the same MCCH modification period), the UE may be unable to receive DCI scrambled by an MCCH-RNTI or may not receive DCI scrambled by an MCCH-RNTI. A reason includes: During a period from a moment t2 to the moment t1, an active BWP does not include the first CFR, and consequently, the UE may be unable to receive DCI scrambled by an MCCH-RNTI or may not receive DCI scrambled by an MCCH-RNTI; after the moment t2, the UE no longer receives DCI scrambled by an MCCH-RNTI or is no longer able to receive DCI scrambled by an MCCH-RNTI; and before the moment t1, the UE has not started to receive DCI scrambled by an MCCH-RNTI or does not receive DCI scrambled by an MCCH-RNTI. Therefore, the UE may have missed the MCCH change notification sent by the network device in the 2^{nd} MCCH modification period. In the 3^{rd} MCCH modification period, even if an active BWP includes the first CFR, the UE receives no MCCH change notification because the network device sends no MCCH change notification.

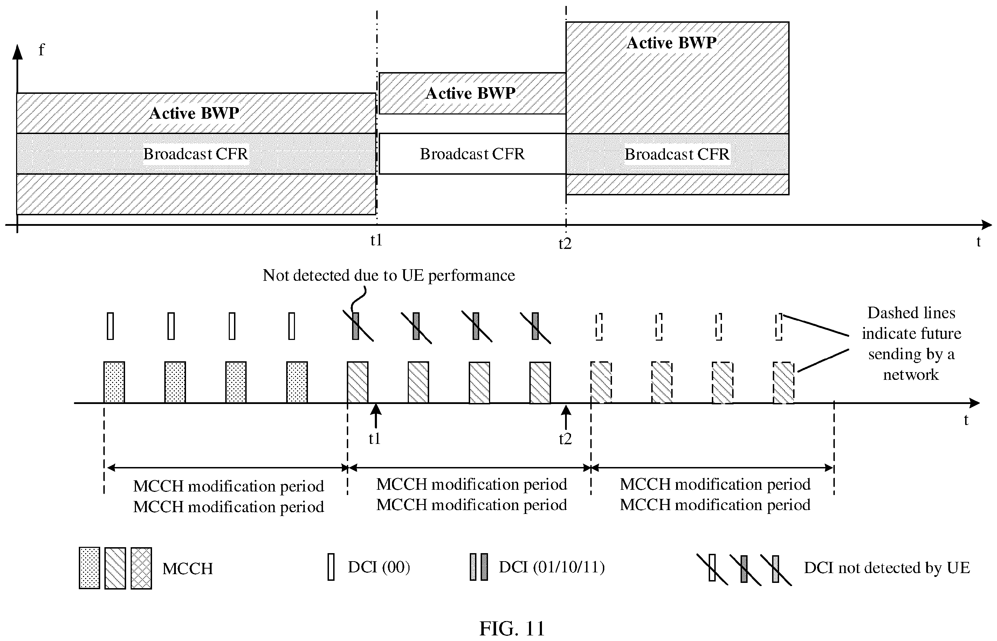

FIG. 10 shows a typical case in which the UE receives no DCI scrambled by an MCCH-RNTI before the second BWP switching is performed. However, this does not constitute a limitation. As shown in FIG. 11, in the same MCCH modification period, the UE may alternatively be unable to receive DCI scrambled by an MCCH-RNTI before the moment t1 due to a reception performance issue (for example, poor signal quality) or the like. In FIG. 11, the moment t1 at which the second BWP switching is performed is not at the start of an MCCH modification period.

For example, the fourth case may include: The second BWP switching and the first BWP switching are performed in a same MCCH modification period, and in the same MCCH modification period, the first BWP switching is performed later than the end of the last MCCH transmission window, and the second BWP switching is performed earlier than the start of the 1^{st} MCCH transmission window.

It can be learned from the embodiments of FIG. 6 to FIG. 11 that, if only a condition that an MCCH change notification is received is used as a condition for triggering the UE to obtain MCCH information, after the first BWP switching is performed, the UE may not know MCCH information currently or most recently used by the network device. A reason includes: Before the first BWP switching is performed, an active BWP does not include the first CFR, and the UE may be unable to receive an MCCH change notification most recently sent by the network device, or MCCH information most recently changed by the network device; and after the first BWP switching is performed, the UE does not obtain MCCH information, because the network device may continue to use previous MCCH information and does not send an MCCH change notification.

Optionally, in this application, "current" is defined by using a moment at which the BWP switching is performed as a reference, and may indicate an MCCH modification period to which the moment belongs. Optionally, the moment at which the BWP switching is performed is used as a reference, and MCCH information most recently sent by the network device is MCCH information currently used by the network device.

Optionally, MCCH information most recently sent by the network device is MCCH information currently used by the network device.

In embodiments of this application, to resolve the problem, the UE may receive MCCH information in an MCCH repetition period that first arrives after the first BWP switching is performed, without waiting for the network device to send a next MCCH change notification. For example, in the first case, an MCCH repetition period that first arrives may be the 1^{st} MCCH repetition period of the 3^{rd} MCCH modification period in FIG. 6. For another example, in the second case, an MCCH repetition period that first arrives may be the 3^{rd} MCCH repetition period of the 3^{rd} MCCH modification period in FIG. 7. For another example, in the third case, an MCCH repetition period that first arrives may be the 3^{rd} MCCH repetition period of the 3^{rd} MCCH modification period in FIG. 8 and FIG. 9. For still another example, in the fourth case, an MCCH repetition period that first arrives may be the 1^{st} MCCH repetition period of the 3^{rd} MCCH modification period in FIG. 10.

That an active BWP does not include the first CFR includes two cases: The active BWP completely does not overlap the first CFR, and the active BWP partially overlaps the first CFR. When the active BWP partially overlaps the first CFR, partially overlapping frequency domain resources provide a possibility that the UE successfully receives DCI.

FIG. 12 to FIG. 15 show several cases in which UE receives an MCCH change notification when an active BWP partially overlaps a first CFR. The MCCH change notification is carried in first DCI.

FIG. 12 shows a first case in which UE receives an MCCH change notification.

As shown in FIG. 12, in the last MCCH transmission window of the 2^{nd} MCCH modification period in the figure and all MCCH transmission windows of the 3^{rd} MCCH modification period in the figure, an active BWP partially overlaps the first CFR. The UE performs BWP switching at a moment t2, where the moment t2 is later than the end of the last MCCH transmission window in an MCCH modification period (the 3^{rd} modification period in the figure) to which the moment t2 belongs. At the moment t2, a BWP is switched from a BWP partially overlapping the first CFR to a BWP including the first CFR.

A possibility is as follows: As shown in FIG. 12, a network device changes MCCH information in the 3^{rd} MCCH modification period and sends an MCCH change notification, and in the subsequent 4^{th} MCCH modification period, continues to use MCCH information changed in the 3^{rd} MCCH modification period and does not send an MCCH change notification. In addition, the UE successfully receives DCI scrambled by an MCCH-RNTI in the 3^{rd} MCCH modification period, and the DCI scrambled by the MCCH-RNTI includes the MCCH change notification.

Although the UE successfully receives the MCCH change notification in the 3^{rd} MCCH modification period, the UE may still miss the MCCH information changed by the network device in the 3^{rd} MCCH modification period (to be specific, an MCCH modification period in which first BWP switching is performed) (the MCCH information is also MCCH information most recently changed by the network device). A reason includes: Before the moment t2, the UE may be unable to receive MCCH information with a large amount of information due to partially overlapping frequency resources; and after the moment t2, the UE no longer receives MCCH information.

For example, the first case may include: In a first MCCH modification period (for example, the 3^{rd} MCCH modification period in the figure), the UE successfully receives, through an active BWP partially overlapping the first CFR, DCI scrambled by an MCCH-RNTI before performing the first BWP switching, and the DCI scrambled by the MCCH-RNTI includes an MCCH change notification. The first BWP switching may be: switching from a BWP not including the first CFR to a BWP including the first CFR.

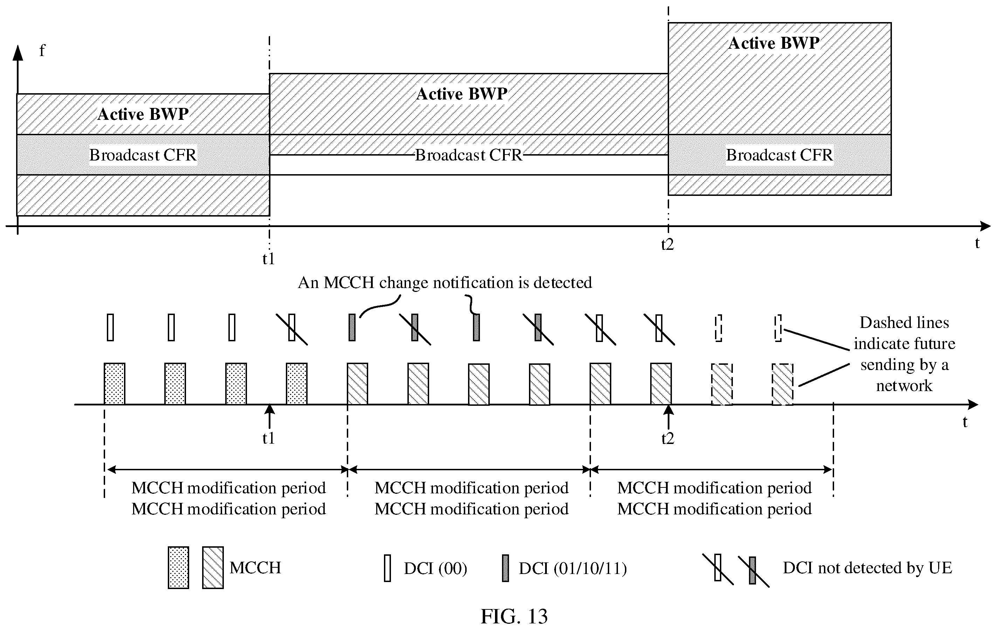

FIG. 13 shows a second case in which UE receives an MCCH change notification.

As shown in FIG. 13, before performing the first BWP switching, the UE further performs second BWP switching at a moment t1: switching from a BWP including the first CFR to the BWP not including the first CFR. In addition, an MCCH modification period (the 1^{st} MCCH modification period in the figure) to which t1 belongs and an MCCH modification period (the 3^{rd} MCCH modification period in the figure) to which t2 belongs are spaced apart by at least one MCCH modification period, for example, are spaced apart by the 2^{nd} MCCH modification period in the figure. As shown in FIG. 13, during a period from the moment t1 to the moment t2, an active BWP partially overlaps the first CFR.

A possibility is as follows: As shown in FIG. 13, a network device changes MCCH information in the 2^{nd} MCCH modification period and sends an MCCH change notification, and in the subsequent 3^{rd} MCCH modification period, continues to use MCCH information changed in the 2^{nd} MCCH modification period and does not send an MCCH change notification. In addition, the UE successfully receives DCI scrambled by an MCCH-RNTI in the 2^{nd} MCCH modification period, and the DCI scrambled by the MCCH-RNTI includes the MCCH change notification.

Although the UE successfully receives the MCCH change notification in the 2^{nd} MCCH modification period (namely, the modification period used as a spacing), the UE may still miss the MCCH information changed by the network device in the 2^{nd} MCCH modification period (the MCCH information is also MCCH information most recently changed by the network device). A reason includes: During the period from the moment t1 to the moment t2, the UE may be unable to receive MCCH information with a large amount of information due to partially overlapping frequency resources.

For example, the second case may include: In the MCCH modification period used as a spacing, the UE successfully receives, through an active BWP partially overlapping the first CFR, DCI scrambled by an MCCH-RNTI, and the DCI scrambled by the MCCH-RNTI includes an MCCH change notification.

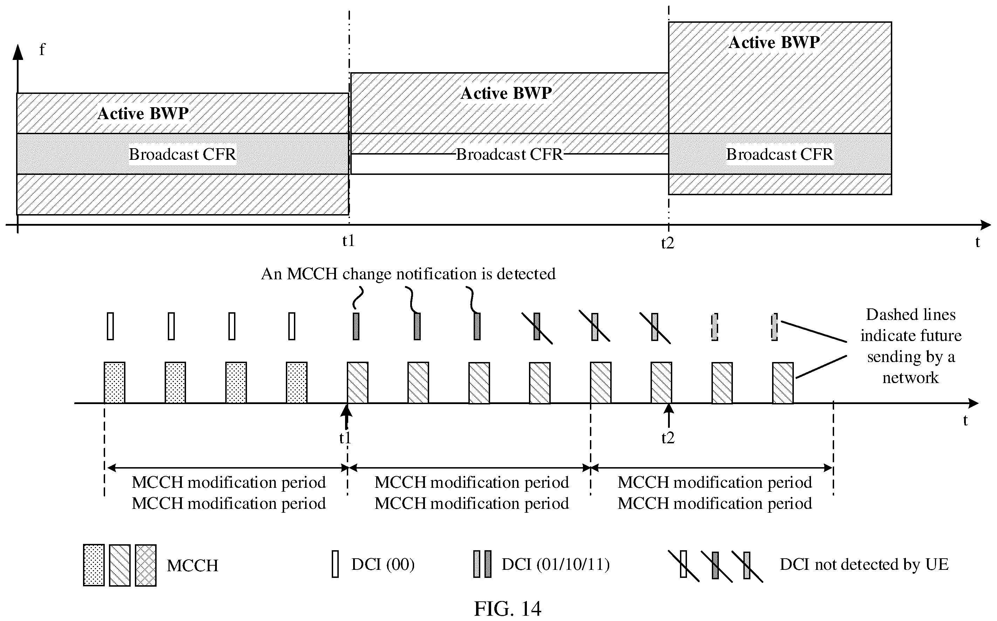

FIG. 14 shows a third case in which UE receives an MCCH change notification.

As shown in FIG. 14, before performing the first BWP switching, the UE further performs second BWP switching at a moment t1: switching from a BWP including the first CFR to the BWP not including the first CFR. In addition, the moment t1 is located at the start of an MCCH modification period (the 2^{nd} MCCH modification period in the figure) to which the moment t1 belongs (for example, located before the start of the 1^{st} MCCH transmission window in the 2^{nd} MCCH modification period). As shown in FIG. 14, during a period from the moment t1 to the moment t2, an active BWP partially overlaps the first CFR.

A possibility is as follows: As shown in FIG. 14, a network device changes MCCH information in the 2^{nd} MCCH modification period and sends an MCCH change notification, and in the subsequent 3^{rd} MCCH modification period, continues to use MCCH information changed in the 2^{nd} MCCH modification period and does not send an MCCH change notification. In addition, the UE successfully receives DCI scrambled by an MCCH-RNTI in the 2^{nd} MCCH modification period, and the DCI scrambled by the MCCH-RNTI includes the MCCH change notification.

Although the UE successfully receives the MCCH change notification in the 2^{nd} MCCH modification period (to be specific, a modification period in which the second BWP switching is performed), the UE may still miss the MCCH information changed by the network device in the 2^{nd} MCCH modification period (the MCCH information is also MCCH information most recently changed by the network device). A reason includes: After the second BWP switching is performed, the UE may be unable to receive MCCH information with a large amount of information due to partially overlapping frequency resources; and before the second BWP switching is performed, the UE has not started to receive DCI scrambled by an MCCH-RNTI or does not receive DCI scrambled by an MCCH-RNTI, and there is no possibility that the UE is triggered by an MCCH change notification to receive MCCH information.

FIG. 14 shows a typical case in which the UE receives no DCI scrambled by an MCCH-RNTI before the second BWP switching is performed. However, this does not constitute a limitation. In the 2^{nd} MCCH modification period, the UE may alternatively be unable to receive DCI scrambled by an MCCH-RNTI before the second BWP switching is performed due to a reception performance issue (for example, poor signal quality) or the like. A moment at which the second BWP switching is performed is not at the start of an MCCH modification period.

For example, the third case may include: In a second MCCH modification period (a modification period in which the second BWP switching is performed, for example, the 2^{nd} MCCH modification period in the figure), the UE successfully receives, through an active BWP partially overlapping the first CFR, DCI scrambled by an MCCH-RNTI after the second BWP switching is performed, and the DCI scrambled by the MCCH-RNTI includes an MCCH change notification. In addition, in the second MCCH modification period, the UE receives no DCI scrambled by an MCCH-RNTI before the second BWP switching is performed.

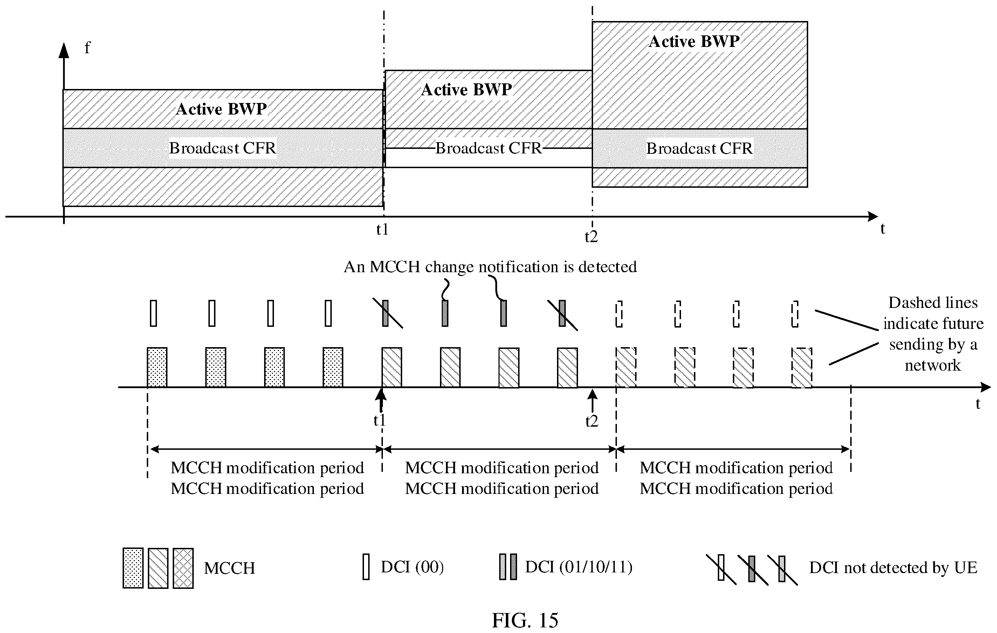

FIG. 15 shows a fourth case in which UE receives an MCCH change notification.

As shown in FIG. 15, before performing the first BWP switching, the UE further performs second BWP switching at a moment t1: switching from a BWP including the first CFR to the BWP not including the first CFR. In addition, the second BWP switching and the first BWP switching are performed in a same MCCH modification period, for example, the 2^{nd} MCCH modification period in the figure. The first BWP switching is performed later than the end of the last MCCH transmission window in the MCCH modification period, and the second BWP switching is performed at the start of the MCCH modification period (for example, before the start of the 1^{st} MCCH transmission window in the 2^{nd} MCCH modification period). As shown in FIG. 15, during a period from the moment t1 to the moment t2, an active BWP partially overlaps the first CFR.

A possibility is as follows: As shown in FIG. 15, a network device changes MCCH information in the 2^{nd} MCCH modification period and sends an MCCH change notification, and in the subsequent 3^{rd} MCCH modification period, continues to use MCCH information changed in the 2^{nd} MCCH modification period and does not send an MCCH change notification. In addition, the UE successfully receives DCI scrambled by an MCCH-RNTI in the 2^{nd} MCCH modification period, and the DCI scrambled by the MCCH-RNTI includes the MCCH change notification.

Although the UE successfully receives the MCCH change notification in the 2^{nd} MCCH modification period (namely, the same MCCH modification period), the UE may still miss the MCCH information changed by the network device in the 2^{nd} MCCH modification period (the MCCH information is also MCCH information most recently changed by the network device). A reason includes: After the first BWP switching is performed, the UE no longer receives MCCH information; during a period between the first BWP switching and the second BWP switching, the UE may be unable to receive MCCH information with a large amount of information due to partially overlapping frequency resources; and before the second BWP switching is performed, the UE has not started to receive DCI scrambled by a DCIMCCH-RNTI or does not receive DCI scrambled by an MCCH-RNTI, and there is no possibility that the UE is triggered by an MCCH change notification to receive MCCH information.

FIG. 15 shows a typical case in which the UE receives no DCI scrambled by an MCCH-RNTI before the second BWP switching is performed. However, this does not constitute a limitation. In the 2^{nd} MCCH modification period, the UE may alternatively be unable to receive DCI before the second BWP switching is performed due to a reception performance issue (for example, poor signal quality) or the like. A moment at which the second BWP switching is performed is not at the start of an MCCH modification period.

For example, the fourth case may include: The second BWP switching and the first BWP switching are performed in a same MCCH modification period. During a period between the second BWP switching and the first BWP switching, the UE successfully receives, through an active BWP partially overlapping the first CFR, DCI scrambled by an MCCH-RNTI, and the DCI scrambled by the MCCH-RNTI includes an MCCH change notification. In the modification period, the first BWP switching is performed later than the end of the last MCCH transmission window, and the second BWP switching is performed earlier than the start of the 1^{st} MCCH transmission window.

It can be learned from the embodiments of FIG. 12 to FIG. 15 that, if only a condition that an MCCH change notification is received is used as a condition for triggering the UE to obtain MCCH information, after the first BWP switching is performed, the UE may not know MCCH information currently or most recently used by the network device. A reason includes: Before the first BWP switching is performed, an active BWP partially overlaps the first CFR, and therefore the UE may be unable to receive MCCH information although the UE successfully receives an MCCH change notification sent by the network device; and after the first BWP switching is performed, the UE does not obtain MCCH information, because the network device may continue to use previous MCCH information and does not send an MCCH change notification.

In embodiments of this application, to resolve the problem, the UE may receive MCCH information in an MCCH repetition period that first arrives after the first BWP switching is performed, without waiting for the network device to send a next MCCH change notification. For example, in the first case, an MCCH repetition period that first arrives may be the 1^{st} MCCH repetition period of the 3^{rd} MCCH modification period in FIG. 12. For another example, in the second case, an MCCH repetition period that first arrives may be the 3^{rd} MCCH repetition period of the 3^{rd} MCCH modification period in FIG. 13. For another example, in the third case, an MCCH repetition period that first arrives may be the 3^{rd} MCCH repetition period of the 3^{rd} MCCH modification period in FIG. 14. For still another example, in the fourth case, an MCCH repetition period that first arrives may be the 1^{st} MCCH repetition period of the 3^{rd} MCCH modification period in FIG. 15.

It should be understood that the conventional technology may change with evolution of technical solutions, and technical solutions provided in this application are not limited to the provided conventional technology.

It should be noted that different embodiments of this application or some steps (for example, any one or more steps) in different embodiments may be combined with each other to form a new embodiment. It should be noted that, some steps or any one or more steps in different embodiments may include an optional step in an embodiment, or may include a required step in an embodiment, or may include an optional step and a required step in an embodiment. This is not limited in this application.

It should be noted that, unless otherwise specified or a logical conflict occurs, terms and/or descriptions in different embodiments are consistent and may be mutually referenced.

It should be noted that a sequence of steps in embodiments of this application is not limited in this application.

It should be noted that a sequence of determining based on different conditions in embodiments of this application is not limited in this application.

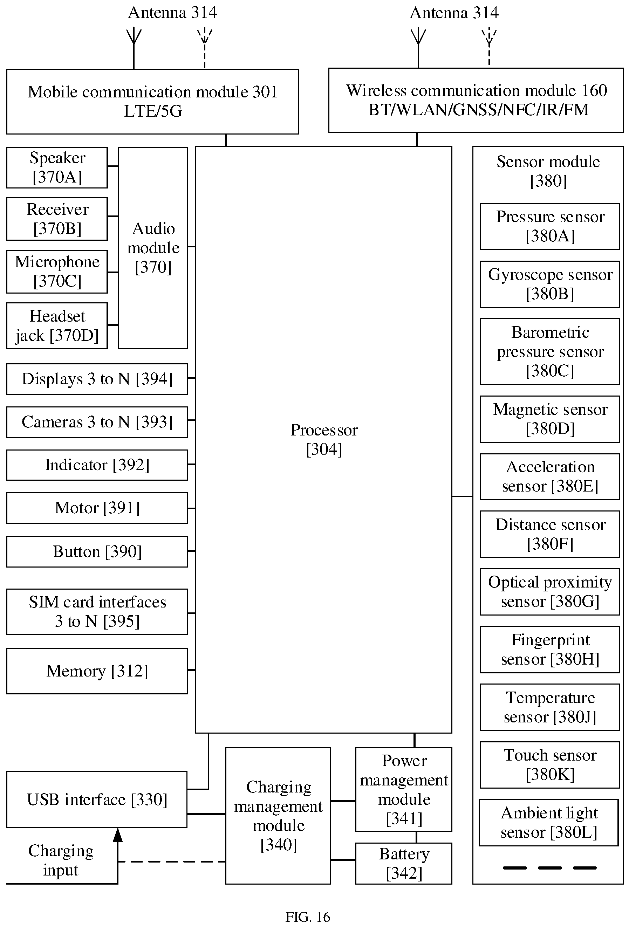

It should be noted that "after" and "when" in this application do not strictly limit a time point. FIG. 16 shows user equipment according to an embodiment of this application. As shown in FIG. 16, the user equipment may include a processor 304, a memory 312, a mobile communication module 301, and an antenna 314.

The processor 304 may include a modem (Modem) processor, and is a module for implementing main functions in wireless communication standards such as 3GPP and ETSI. The modem may be used as an independent chip, or may be combined with other chips or circuits to form a system-on-a-chip or an integrated circuit. These chips or integrated circuits may be used in all devices that implement wireless communication functions, including a mobile phone, a computer, a notebook computer, a tablet computer, a router, a wearable device, a vehicle, a home appliance, and the like. It should be noted that, in different implementations, the processor 304 may be coupled to an off-chip memory as an independent chip, in other words, the chip does not include a memory, or the processor 304 and an on-chip memory are integrated into a chip, in other words, the chip includes a memory.

The processor 304 may further include an application processor (application processor, AP), a graphics processing unit (graphics processing unit, GPU), an image signal processor (image signal processor, ISP), a controller, a video codec, a digital signal processor (digital signal processor, DSP), a neural-network processing unit (neural-network processing unit, NPU), and/or the like. Different processing units may be independent components, or may be integrated into one or more processors.

The memory 312 is coupled to the processor 304, and is configured to store various software programs and/or a plurality of groups of instructions. During specific implementation, the memory 312 may include a high-speed random access memory, and may also include a nonvolatile memory, for example, one or more magnetic disk storage devices, a flash storage device, or another nonvolatile solid-state storage device. The memory 312 may store an operating system, for example, Linux or HarmonyOS. The memory 312 may further store a network communication program. The network communication program may be configured to communicate with one or more auxiliary devices, one or more user equipments, or one or more network devices. The memory 312 may further store a human-computer interaction interface program. The human-computer interaction interface program may vividly display content of an application on a graphical operation interface, and receive control operations of a user on the application through input controls such as a menu, a dialog box, and a button.

The memory 312 may be configured to store a program for implementing, on the user equipment side, the MCCH information obtaining method provided in embodiments of this application. For implementations of the MCCH information obtaining method provided in embodiments of this application, refer to the foregoing embodiments.

The processor 304 may be configured to read and execute computer-readable instructions. Specifically, the processor 304 may be configured to invoke a program stored in the memory 312, for example, the program for implementing, on the user equipment side, the MCCH information obtaining method provided in embodiments of this application, and execute instructions included in the program.

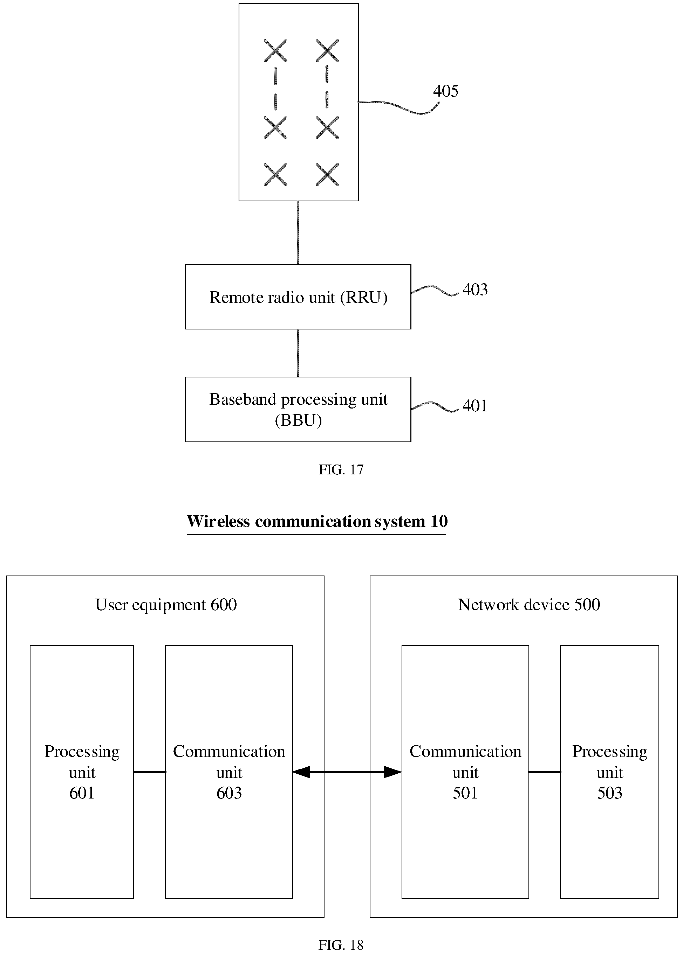

The mobile communication module 301 may be used by the user equipment to communicate with another communication device, for example, the network device shown in FIG. 17. The mobile communication module 301 may include a transmitter and a receiver. The transmitter may be configured to transmit a low-frequency baseband signal output by the processor 304, for example, modulate the low-frequency baseband signal into a medium- or highfrequency signal. The receiver may be configured to receive a mobile communication signal received by the antenna 314. For example, the receiver may demodulate a modulated received signal. The transmitter and the receiver may be considered as a wireless modem. The mobile communication module 301 interacts with the processor 304 through a communication interface. The communication interface may include one or more of a long term evolution (Long Term Evolution, LTE) (4G) communication interface, a 5G NR communication interface, and the like, or may be a possible 6G or 7G communication interface in the future. In addition to a wireless communication interface, the user equipment may be further equipped with a wired communication interface 301, for example, a local access network (Local Access Network, LAN) interface.

The antenna 314 may be connected to the mobile communication module 301, and may be configured to convert electromagnetic energy in a transmission line into an electromagnetic wave in free space, or convert an electromagnetic wave in free space into electromagnetic energy in a transmission line.

**In** addition to the mobile communication module 301, the user equipment may further include other communication components, for example, a wireless communication module 160 such as a GPS module, a Bluetooth (Bluetooth) module, or a wireless fidelity (Wireless Fidelity, Wi-Fi) module. **In** addition, the user equipment may further support other wireless communication signals, for example, a satellite signal or a short-wave signal.

As shown in FIG. 16, the user equipment may further include a universal serial bus (universal serial bus, USB) interface 330, a charging management module 340, a power management module 341, a battery 342, an audio module 370, a speaker 370A, a receiver 370B, a microphone 370C, a headset jack 370D, a sensor module 380, a button 390, a motor 391, an indicator 392, a camera 393, a display 394, a subscriber identity module (subscriber identity module, SIM) card interface 395, and the like. The sensor module 380 may include a pressure sensor 380A, a gyroscope sensor 380B, a barometric pressure sensor 380C, a magnetic sensor 380D, an acceleration sensor 380E, a distance sensor 380F, an optical proximity sensor 380G, a fingerprint sensor 380H, a temperature sensor 380J, a touch sensor 380K, an ambient light sensor 380L, and the like.

The user equipment may implement a display function through the GPU, the display 394, the application processor, and the like. The GPU is a microprocessor for image processing, and is connected to the display 394 and the application processor. The GPU is configured to perform mathematical and geometric computation, and render an image. In addition to the display 394, the user equipment may further implement a human-computer interaction function through the camera 393, the audio module 370, the speaker 370A, the receiver 370B, the microphone 370C, the sensor module 380, the button 390, and the like.

The user equipment shown in FIG. 16 is merely an example. During actual application, the user equipment may further include more or fewer components. This is not limited herein.

FIG. 17 shows a network device according to an embodiment of this application. As shown in FIG. 17, the network device may include a baseband processing unit (baseband unit, BBU) 401, a remote radio unit (remote radio unit, RRU) 403, and an antenna 405.

The baseband processing unit (BBU) 401 and the remote radio unit (RRU) 403 may be connected to each other through an optical fiber. One BBU may be connected to a plurality of RRUs. The other end of the remote radio unit (RRU) 403 is connected to the antenna 405.

The baseband processing unit (BBU) 401 mainly implements baseband processing functions (for example, coding, multiplexing, modulation, and spectrum spreading) of a Uu interface, Iub interface functions of a base station controller (radio network controller, RNC), signaling processing, and other functions. The baseband processing unit (BBU) 401 may include a memory and a processor. The memory is configured to store various software programs and/or a plurality of groups of instructions, and an operating system, for example, Linux or HarmonyOS. The processor may be configured to read and execute computer-readable instructions. Specifically, the processor may be configured to invoke a program stored in the memory, for example, a program for implementing, on the network device side, the MCCH information obtaining method provided in embodiments of this application, and execute instructions included in the program. The processor may be a modem (Modem) processor, and is a module for implementing main functions in wireless communication standards such as 3GPP and ETSI. The modem may be used as an independent chip, or may be combined with other chips or circuits to form a system-on-a-chip or an integrated circuit. These chips or integrated circuits may be used in all network-side devices that implement wireless communication functions. For example, the network-side device is referred to as an evolved NodeB (evolved NodeB, eNB or eNodeB) in an LTE network, and is referred to as a 5G base station (NR NodeB, gNB) in a 5G network. The processor may be coupled to an off-chip memory as an independent chip, in other words, the chip does not include a memory. Alternatively, the processor and an on-chip memory are coupled and integrated into a chip, in other words, the chip includes a memory.

The remote ratio unit (RRU) 403 supports distributed network coverage. The remote radio unit (RRU) 403 may include an intermediate frequency module, a transceiver module, a power amplifier, and a filter module. The digital intermediate frequency module is configured to perform modulation and demodulation for optical transmission, digital up-conversion and down-conversion, A/D conversion, and the like. The remote radio unit (RRU) 403 may be mainly configured to convert an intermediate frequency signal into a radio frequency signal, and then transmit the radio frequency signal through the antenna after the radio frequency signal passes through the power amplifier and the filter module. An operation principle of the remote radio unit (RRU) 403 may include: During downlink transmission, a baseband signal undergoes frequency conversion, filtering, linear amplification, and other processing, and is then transmitted to the antenna. During uplink reception, a signal received from user equipment undergoes filtering and low-noise amplification, further undergoes amplification of a small radio frequency signal, filtering, down-conversion, and other processing, and then undergoes analog-to-digital conversion, digital intermediate frequency processing, and other processing.

The antenna 405 may be configured to convert electromagnetic energy in a transmission line into an electromagnetic wave in free space, or convert an electromagnetic wave in free space into electromagnetic energy in a transmission line. Usually, the antenna 405 may include a radiating element, a feeding network, a radome, and other parts. The radiating element may also be referred to as an antenna element, an element, or the like. The radiating element is a basic element for constituting an antenna array, and can effectively perform radiation to the outside or receive a radio wave (a radio signal) inside. The feeding network is a structure that feeds a baseband signal to the radiating element based on a specific amplitude and phase, or sends a received radio signal to a base station signal processing unit based on specific amplitude and a specific phase. Usually, the feeding network includes a controlled impedance transmission line, and includes a phase shifter, a combiner, a filter, and other components. A radio frequency system may control a phase shifter in an antenna array, adjust a phase of a baseband signal corresponding to each antenna, and finally control a downtilt of an entire radio frequency network. The radome is configured to protect internal components of the antenna from impact of an external environment. To improve transmission performance for a radio signal, the radome usually has a good electromagnetic wave penetration characteristic and good mechanical performance. The antenna may further include other external components, for example, a reflection panel, configured to improve reception sensitivity for an antenna signal and reflect and aggregate the antenna signal to a receiving point. This can not only greatly enhance a transmitting/receiving capability of the antenna, but also block and shield interference caused by other radio waves from the back (in an opposite direction) to signal receiving.

The baseband processing unit (BBU) 401, the remote radio unit (RRU) 403, and the antenna 405 in the network device may also be reconfigured into the following three functional entities: a central unit (Central Unit, CU), a distributed unit (Distributed Unit, DU), and an active antenna unit (Active Antenna Unit, AAU). The remote radio unit (RRU) 403 and the antenna 405 may be combined into an AAU, and functions of the BBU may be distributed to the CU and the DU.

It should be noted that the network device shown in FIG. 17 is merely an implementation of this application. During actual application, the network device may alternatively include more or fewer components. This is not limited herein.

An embodiment of this application further provides a wireless communication system. The wireless communication system may include a network device and user equipment. The user equipment may be the user equipment in the foregoing embodiments, and the network device may be the network device in the foregoing embodiments. Specifically, the user equipment may be the user equipment shown in FIG. 16, and the network device may be the network device shown in FIG. 17.

FIG. 18 shows functional composition of a network device 500 and user equipment 600 in a wireless communication system 10 according to an embodiment of this application. The network device 500 may be the network device in the foregoing embodiments, and the user equipment 600 may be the user equipment in the foregoing embodiments.

As shown in FIG. 18, the user equipment 600 may include a processing unit 601 and a communication unit 603.

The processing unit 601 may be configured to: determine whether a preset condition is met, and if the preset condition is met, control the communication unit 603 to obtain MCCH information. The preset condition may include one or more of the following: a first condition: the UE switches to a first BWP, where the first BWP includes a first CFR; and a second condition: the UE successfully receives a first message sent by the network device, where the first message indicates an MCCH change.

The communication unit 603 may be configured to obtain MCCH information.

For specific implementations of the preset condition and other technical details, refer to the foregoing embodiments. Details are not described herein again.

Optionally, the communication unit 603 may be further configured to receive the first message.

Optionally, the communication unit 603 may be further configured to receive DCI that is scrambled by an MCCH-RNTI and that is sent by the network device, and may further receive an MTCH sent by the network device.

Optionally, the communication unit 603 may be further configured to report, to the network device, an MBS broadcast service that the UE is interested in.

Optionally, the communication unit 603 may be further configured to obtain a CFR configuration. For descriptions of the CFR configuration, refer to the foregoing embodiments.

As shown in FIG. 18, the network device 500 may include a communication unit 501 and a processing unit 503.

The communication unit 501 may be configured to periodically transmit, on the first CFR, MCCH information and DCI scrambled by an MCCH-RNTI.

The processing unit 503 may be configured to: change MCCH information, and when the MCCH information changes and an active BWP of the UE does not include the first CFR, control the communication unit 501 to send the first message to the UE.

The communication unit 501 may be further configured to send the first message to the UE.

The communication unit 501 may be further configured to send the MTCH on the first CFR.

Optionally, the communication unit 501 may be further configured to receive the MBS broadcast service that the UE is interested in and that is reported by the UE.

Optionally, the communication unit 501 may be further configured to obtain the CFR configuration. For descriptions of the CFR configuration, refer to the foregoing embodiments.

It can be understood that, for specific implementations of the functional units included in the network device 500 and the user equipment 600, reference may be made to the foregoing embodiments. Details are not described herein again.

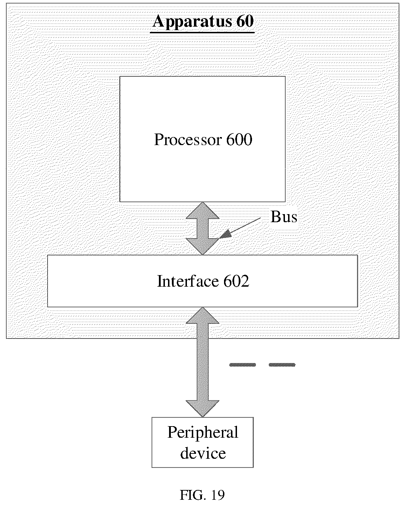

FIG. 19 is a diagram of a structure of an apparatus according to this application. As shown in FIG. 19, the apparatus 60 may include a processor 600 and one or more interfaces 602 coupled to the processor 600.

The processor 600 may be configured to read and execute computer-readable instructions. During specific implementation, the processor 600 may mainly include a controller, an arithmetic unit, and a register. The controller mainly decodes instructions and sends a control signal for an operation corresponding to the instructions. The arithmetic unit mainly performs a fixed-point or floating-point arithmetic operation, a shift operation, a logic operation, and the like, and may also perform an address operation and address translation. The register mainly stores a register operand, an intermediate operation result, and the like that are temporarily stored during instruction execution. During specific implementation, a hardware architecture of the processor 600 may be an application-specific integrated circuit (Application-Specific Integrated Circuit, ASIC) architecture, an MIPS architecture, an ARM architecture, an NP architecture, or the like. The processor 600 may be a single-core processor or a multi-core processor.

The interface 602 may be a general purpose input/output (General Purpose Input/Output, GPIO) interface, and may be connected to a plurality of peripheral devices (for example, a radio frequency module). The interface 602 may further include a plurality of independent interfaces, for example, an Ethernet interface and a mobile communication interface (for example, an X1 interface or a Uu interface), which are separately used for communication between different peripheral devices and the processor 600.

In this application, the processor 600 may be configured to invoke, from a memory, a program for implementing, on a network device side or user equipment side, the MCCH information obtaining method provided in embodiments of this application, and execute instructions included in the program. The interface 602 may be configured to input to-be-processed data to the processor 600, and may output a processing result of the processor 600 to the outside. For the MCCH information obtaining method provided in embodiments of this application, refer to the foregoing content. Details are not described herein again.

When the apparatus 60 is included in user equipment, specific implementations of the components of the apparatus 60 may be as follows:
In some embodiments, the to-be-processed data input to the processor 600 through the interface 602 may include a resource location of an active BWP of the UE and a CFR configuration (indicating a resource location of a first CFR), so that the processor 600 determines, based on the to-be-processed data, whether a first condition is met, to be specific, whether the active BWP is switched to a first BWP. The processor 600 may be further configured to output a processing result to the outside (an external communication module) through the interface 602 when the first condition is met, where the processing result is a command for obtaining MCCH information. In this way, the communication module may be triggered by the command to obtain MCCH information.

In some other embodiments, the to-be-processed data input to the processor 600 through the interface 602 may include a result indicating whether a first message is received, so that the processor determines, based on the to-be-processed data, whether a second condition is met. The processor 600 may be further configured to output a processing result to the outside (an external communication module) through the interface 602 when the second condition is met, where the processing result is a command for obtaining MCCH information. In this way, the communication module may be triggered by the command to obtain MCCH information.

In still some other embodiments, the to-be-processed data input to the processor 600 through the interface 602 may include a resource location of an active BWP of the UE, a CFR configuration (indicating a resource location of a first CFR), and a result indicating whether a first message is received, so that the processor determines, based on the to-be-processed data, whether both a first condition and a second condition are met. The to-be-processed data does not necessarily need to be input to the processor 600 at the same time. The processor 600 may be further configured to output a processing result to the outside (an external communication module) through the interface 602 when both conditions are met, where the processing result is a command for obtaining MCCH information. In this way, the communication module may be triggered by the command to obtain MCCH information.

When the apparatus 60 is included in a network device, specific implementations of the components of the apparatus 60 may be as follows:
In some embodiments, the to-be-processed data input to the processor 600 through the interface 602 may include an active BWP of UE and a CFR configuration, and the to-be-processed data may be stored in a memory, so that the processor 600 determines, based on the to-be-processed data when MCCH information changes, whether the active BWP of the UE includes a first CFR. The processor 600 may be further configured to output a processing result to the outside (an external communication module) through the interface 602 when the MCCH information changes and the active BWP does not include the first CFR, where the processing result is a command for sending a first message to the UE. In this way, the communication module may be triggered by the command to send the first message to the UE.

For descriptions of the first condition, the second condition, the first message, and the like, and other technical details, refer to the foregoing embodiments. Details are not described herein again.

It should be noted that functions respectively corresponding to the processor 600 and the interface 602 may be implemented by using a hardware design, or may be implemented by using a software design, or may be implemented by using a combination of software and hardware. This is not limited herein.

Methods or algorithm steps described with reference to content disclosed in embodiments of this application may be implemented by hardware, or may be implemented by a processor executing software instructions. The software instructions may include corresponding software modules. The software modules may be stored in a RAM, a flash memory, a ROM, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a transceiver or a relay device. Certainly, the processor and the storage medium may alternatively exist in a wireless access network device or user equipment as discrete components.

A person skilled in the art should be aware that, in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium. The communication medium includes any medium suitable for transmitting a computer program from one place to another. The storage medium may be any available medium accessible to a general-purpose or dedicated computer.

In the foregoing specific implementations, the objectives, the technical solutions, and the benefits of embodiments of this application are further described in detail. It should be understood that the foregoing descriptions are merely specific implementations of embodiments of this application, but are not intended to limit the protection scope of embodiments of this application. Any modification, equivalent replacement, or improvement made based on the technical solutions in embodiments of this application shall fall within the protection scope of embodiments of this application.

## Claims

1. A multicast/broadcast service control channel MCCH information obtaining method, comprising:
obtaining, by user equipment UE, MCCH information when a preset condition is met, wherein
the preset condition comprises one or more of the following:
a first condition: the UE switches to a first bandwidth part BWP, wherein the first BWP comprises a first common frequency resource CFR, and
a second condition: the UE successfully receives a first message sent by a network device, wherein the first message indicates an MCCH information change.

2. The method according to claim 1, wherein that the UE switches to a first BWP comprises:
the UE switches from a second BWP to the first BWP, wherein the second BWP does not comprise the first CFR.

3. The method according to claim 1 or 2, wherein the preset condition comprises the first condition, and the preset condition further comprises:
in at least one MCCH modification period, the UE receives no downlink control information DCI scrambled by an MCCH radio network temporary identifier MCCH-RNTI.

4. The method according to claim 3, wherein the at least one MCCH modification period is after a first moment, and the first moment is a moment at which the UE last successfully receives DCI scrambled by an MCCH-RNTI.

5. The method according to claim 2, wherein the preset condition comprises the first condition, and the preset condition further comprises:
a first state lasts for at least one MCCH modification period, or lasts for duration of at least one MCCH modification period, wherein the first state indicates that an active BWP of the UE does not comprise the first CFR.

6. The method according to claim 1 or 2, wherein the preset condition comprises the first condition, and the preset condition further comprises:
the UE successfully receives first DCI, wherein
the first DCI is scrambled by an MCCH-RNTI, the first DCI comprises first indication information and/or second indication information, the first indication information indicates that a new MBS broadcast service starts, and the second indication information indicates an MCCH information change other than a new MBS broadcast service.

7. The method according to claim 6, wherein the preset condition further comprises: the UE receives no MCCH information after successfully receiving the first DCI.

8. The method according to claim 6 or 7, wherein that the UE successfully receives first DCI comprises: the UE successfully receives the first DCI on the second BWP, wherein the second BWP partially overlaps the first CFR.

9. The method according to any one of claims 1 to 8, wherein the first message is carried in dedicated signaling, paging DCI, or a paging message.

10. The method according to claim 1 or 2, wherein the first message comprises any one or more of the following: third indication information, fourth indication information, and fifth indication information, wherein
the third indication information indicates that a new MBS broadcast service starts, the fourth indication information indicates an MCCH information change other than a new MBS broadcast service, and the fifth indication information indicates a first MBS broadcast service.

11. The method according to claim 10, wherein the first MBS broadcast service comprises one or more of the following: a broadcast service that the UE is receiving, and a broadcast service that the UE is interested in receiving.

12. The method according to claim 1 or 2, wherein the preset condition comprises the first condition, and the obtaining, by UE, MCCH information comprises:
starting, by the UE, to obtain the MCCH information; or
obtaining, by the UE, the MCCH information in a next MCCH repetition period.

13. The method according to claims 1 to 12, wherein the UE is receiving an MBS broadcast service, and/or the UE is interested in receiving an MBS broadcast service.

14. A multicast/broadcast service control channel MCCH information obtaining method, comprising:
sending, by the network device, a first message to UE when a third condition is met, wherein the first message indicates an MCCH information change, wherein
the third condition comprises any one or more of the following: a condition A, a condition B, a condition C, and a condition D;
the condition A comprises: MCCH information changes;
the condition B comprises: an active BWP of the UE does not comprise a first CFR;
the condition C comprises: the network device successfully receives a second message, wherein the second message is an MBS interest indication message; and
the condition D comprises: an MCCH information change is related to a broadcast service that the UE is receiving and/or a broadcast service that the UE is interested in receiving.

15. The method according to claim 14, wherein the first message is carried in dedicated signaling, paging DCI, or a paging message.

16. The method according to claim 14 or 15, wherein the first message comprises any one or more of the following: third indication information, fourth indication information, and fifth indication information, wherein
the third indication information indicates that a new MBS broadcast service starts, the fourth indication information indicates an MCCH information change other than a new MBS broadcast service, and the fifth indication information indicates a first MBS broadcast service.

17. User equipment UE, comprising a processing unit and a communication unit, wherein
the processing unit is configured to determine that a preset condition is met; and
the communication unit is configured to obtain MCCH information, wherein
the preset condition comprises one or more of the following:
a first condition: the UE switches to a first BWP, wherein the first BWP comprises a first CFR; and
a second condition: the communication unit successfully receives a first message sent by a network device, wherein the first message indicates an MCCH change.

18. The user equipment according to claim 17, wherein that the UE switches to a first BWP comprises:
the UE switches from a second BWP to the first BWP, wherein the second BWP does not comprise the first CFR.

19. The user equipment according to claim 17 or 18, wherein the preset condition comprises the first condition, and the preset condition further comprises:
in at least one MCCH modification period, the communication unit receives no DCI scrambled by an MCCH-RNTI.

20. The user equipment according to claim 19, wherein the at least one MCCH modification period is after a first moment, and the first moment is a moment at which the communication unit last successfully receives DCI scrambled by an MCCH-RNTI.

21. The user equipment according to claim 18, wherein the preset condition comprises the first condition, and the preset condition further comprises:
a first state lasts for at least one MCCH modification period, or lasts for duration of at least one MCCH modification period, wherein the first state indicates that an active BWP of the UE does not comprise the first CFR.

22. The user equipment according to claim 17 or 18, wherein the preset condition comprises the first condition, and the preset condition further comprises:
the communication unit successfully receives first DCI, wherein
the first DCI is scrambled by an MCCH-RNTI, the first DCI comprises first indication information and/or second indication information, the first indication information indicates that a new MBS broadcast service starts, and the second indication information indicates an MCCH information change other than a new MBS broadcast service.

23. The user equipment according to claim 22, wherein the preset condition further comprises: the communication unit receives no MCCH message after successfully receiving the first DCI.

24. The user equipment according to claim 22 or 23, wherein that the communication unit successfully receives first DCI comprises: the communication unit successfully receives the first DCI on the second BWP, wherein the second BWP partially overlaps the first CFR.

25. The user equipment according to any one of claims 17 to 24, wherein the first message is carried in dedicated signaling, paging DCI, or a paging message.

26. The user equipment according to claim 17 or 18, wherein the first message comprises any one or more of the following: third indication information, fourth indication information, and fifth indication information, wherein
the third indication information indicates that a new MBS broadcast service starts, the fourth indication information indicates an MCCH message change other than a new MBS broadcast service, and the fifth indication information indicates a first MBS broadcast service.

27. The user equipment according to claim 26, wherein the first MBS broadcast service comprises one or more of the following: a broadcast service that the UE is receiving, and a broadcast service that the UE is interested in receiving.

28. The user equipment according to claim 17 or 18, wherein the preset condition comprises the first condition, and the communication unit is specifically configured to start to obtain the MCCH message, or obtain the MCCH message in a next MCCH repetition period.

29. The user equipment according to any one of claims 17 to 28, wherein the UE is receiving an MBS broadcast service, and/or the UE is interested in receiving an MBS broadcast service.

30. A network device, comprising a communication unit and a processing unit, wherein
the processing unit is configured to determine that a third condition is met; and
the communication unit is configured to send a first message to UE, wherein the first message indicates an MCCH information change, wherein
the third condition comprises any one or more of the following: a condition A, a condition B, a condition C, and a condition D;
the condition A comprises: MCCH information changes;
the condition B comprises: an active BWP of the UE does not comprise a first CFR;
the condition C comprises: the network device successfully receives a second message, wherein the second message is an MBS interest indication message; and
the condition D comprises: an MCCH information change is related to a broadcast service that the UE is receiving and/or a broadcast service that the UE is interested in receiving.

31. The method according to claim 30, wherein the first message is carried in dedicated signaling, paging DCI, or a paging message.

32. The method according to claim 30 or 31, wherein the first message comprises any one or more of the following: third indication information, fourth indication information, and fifth indication information, wherein
the third indication information indicates that a new MBS broadcast service starts, the fourth indication information indicates an MCCH message change other than a new MBS broadcast service, and the fifth indication information indicates a first MBS broadcast service.

33. A communication system, comprising user equipment and a network device, wherein
the user equipment is the user equipment according to any one of claims 1 to 16; and
the network device is the network device according to any one of claims 17 to 32.
